(19) **Europäisches Patentamt / European Patent Office / Office européen des brevets**

(11) **EP 4 526 212 B1**

(12) **FASCICULE DE BREVET EUROPEEN**

(45) Date de publication et mention de la délivrance du brevet:
**25.06.2025 Bulletin 2025/26**

(21) Numéro de dépôt: **23744204.1**

(22) Date de dépôt: **20.06.2023**

(51) Classification Internationale des Brevets (IPC):
**B64G 3/00** *(2006.01)*      **B64G 1/10** *(2006.01)*
**B64G 1/68** *(2006.01)*      **G03B 15/00** *(2021.01)*
**G06V 20/13** *(2022.01)*      **H04N 23/695** *(2023.01)*
**G06T 7/246** *(2017.01)*      **G06V 10/25** *(2022.01)*
**G06V 20/00** *(2022.01)*      *G06V 10/143* *(2022.01)*

(52) Classification Coopérative des Brevets (CPC):
**B64G 1/1021; B64G 1/68; B64G 3/00; G03B 15/006; G06T 7/246; G06V 10/25; G06V 20/00; G06V 20/13; H04N 23/695;** G06T 2207/10032; G06V 10/143

(86) Numéro de dépôt international:
**PCT/FR2023/050910**

(87) Numéro de publication internationale:
**WO 2023/247882 (28.12.2023 Gazette 2023/52)**

(54) **PROCÉDÉ ET DISPOSITIF POUR LA DÉTERMINATION D'UNE LOI DE POINTAGE D'UN SATELLITE PAR DÉTERMINATION D'UNE DISTRIBUTION SPATIO-TEMPORELLE**

VERFAHREN UND VORRICHTUNG ZUR BESTIMMUNG EINER RICHTREGEL FÜR EINEN SATELLITEN DURCH BESTIMMUNG EINER RAUM-ZEIT-VERTEILUNG

METHOD AND DEVICE FOR DETERMINING A POINTING LAW FOR A SATELLITE BY DETERMINING A SPACE-TIME DISTRIBUTION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.06.2022 FR 2206194**

(43) Date de publication de la demande:
**26.03.2025 Bulletin 2025/13**

(73) Titulaires:
• **Airbus Defence and Space SAS**
**31402 Toulouse Cedex 4 (FR)**
• **Centre National d'Etudes Spatiales**
**75001 Paris (FR)**

(72) Inventeurs:
• **WENGER, Thibaut**
**31402 TOULOUSE CEDEX 4 (FR)**
• **PICARD, Mathieu**
**31402 TOULOUSE CEDEX 4 (FR)**
• **TOURNEUR, Cyrille**
**31402 TOULOUSE CEDEX 4 (FR)**

(74) Mandataire: **Plasseraud IP**
**104 Rue de Richelieu**
**CS92104**
**75080 Paris Cedex 02 (FR)**

(56) Documents cités:
**US-A1- 2014 039 855**      **US-A1- 2015 088 475**
**US-B1- 9 916 507**      **US-B2- 8 511 614**

## Description

### Domaine technique

La présente invention appartient au domaine de la surveillance des objets spatiaux, et concerne plus particulièrement un procédé de détermination automatique de loi de pointage d'un instrument d'observation d'au moins un satellite pour la recherche de tels objets spatiaux.

### Etat de la technique

L'augmentation constante du nombre d'objets spatiaux non contrôlés en orbite terrestre représente un risque grandissant pour les opérations des systèmes spatiaux et pour les populations au sol.

De ce fait, on assiste au développement de systèmes de surveillance des objets spatiaux en orbite terrestre visant à cataloguer les objets spatiaux et leurs paramètres orbitaux, afin de limiter ces risques.

Il est estimé qu'environ 750000 objets spatiaux plus gros qu'1 cm orbitent autour de la Terre, chacun ayant la capacité d'endommager voire de détruire un satellite opérationnel. Ces objets spatiaux de faibles tailles, difficilement détectables, représentent une menace majeure pour les opérations spatiales alors que la connaissance de leurs trajectoires reste partielle. Il est à noter que ce nombre est amené à augmenter même sans nouveaux lancements du seul fait des collisions entre objets spatiaux non contrôlés.

Par ailleurs, pour les orbites basses (« low earth orbit » ou LEO, altitude inférieure à 2000 km), compte tenu des vitesses relatives des objets spatiaux évoluant sur ces orbites, les objets spatiaux de taille supérieure à 5 mm représentent un risque aux conséquences catastrophiques en cas de collision avec des satellites opérés sur ces orbites.

L'objectif principal de la surveillance de l'espace consiste à détecter, et de préférence déterminer et maintenir le plus précisément possible la connaissance de la trajectoire (c'est-à-dire les paramètres orbitaux) des objets spatiaux présents en orbite autour de la Terre. Cela permet d'une part de minimiser les risques de collision avec les satellites opérés en orbite et, d'autre part, de minimiser le nombre de fausses alarmes de collision. En effet, en cas de risque de collision, une manœuvre d'évitement de collision est effectuée par le satellite en danger. Une telle manœuvre d'évitement se traduit en général par des interruptions de service, des surcoûts d'opérations et une réduction de la durée de vie du satellite du fait d'une surconsommation d'ergols. Par conséquent, il est important de réduire le nombre de fausses alarmes de collision afin de réduire le nombre de manœuvres d'évitement inutiles.

La surveillance de l'espace était jusqu'à présent réalisée par des moyens positionnés à la surface de la Terre, notamment des moyens actifs tels que des radars ou des lidars ou des moyens passifs tels que des télescopes optiques exploitant l'éclairement solaire des objets spatiaux à surveiller. Toutefois, ces systèmes de surveillance terrestres présentent de nombreuses limitations physiques et technologiques de portée pour les systèmes basés sur des moyens actifs, limitant l'emploi de ces moyens actifs aux orbites LEO, et de disponibilité et de capacité de détection pour les systèmes basés sur des moyens passifs du fait des perturbations atmosphériques. La limitation la plus significative est la taille minimale des objets spatiaux pouvant être détectés, de l'ordre de 5 à 10 cm pour des orbites LEO.

De nouveaux concepts de systèmes de surveillance de l'espace depuis l'espace sont de ce fait en cours d'étude et de développement afin de remédier aux insuffisances des systèmes de surveillance utilisant des moyens positionnés à la surface de la Terre. Ces systèmes consistent à surveiller l'espace à l'aide de moyens positionnés dans l'espace (« space-based surveillance system » ou SBSS). La plupart des systèmes SBSS en cours d'étude et/ou de développement sont basés sur des satellites opérés en orbite, basse en général, et comportant des instruments d'observation optiques et passifs, exploitant pour la plupart l'éclairement solaire diffusé par les objets spatiaux à surveiller. Du fait de contraintes technologiques et des lois de l'optique, le champ de vue instantané couvert par ces instruments d'observation est en général faible, de l'ordre de $5°^2$ à $10°^2$, limitant ainsi la portion d'espace pouvant être surveillée à un instant donné. Par ailleurs, même si le nombre estimé d'objets spatiaux est important, l'espace à surveiller est extrêmement vaste et la densité moyenne d'objets spatiaux orbitant autour de la Terre reste très faible. De ce fait, et compte tenu également du champ de vue limité des instruments d'observation, le choix des zones à observer pour favoriser le nombre de nouvelles détections d'objets spatiaux non référencés (c'est-à-dire non connus *a priori)* est non trivial et crucial vis-à-vis des performances des systèmes SBSS. Le document US9916507 B1 divulgue une loi de pointage selon l'art antérieur. Le document US2015088475 A1 divulgue une visualisation des probabilités d'observabilité des objets spatiaux.

### Exposé de l'invention

La présente invention a pour objectif de remédier à tout ou partie des inconvénients de l'art antérieur, notamment ceux exposés ci-avant, en proposant une solution qui permette de mettre au point de manière automatique des lois de pointages du ou des instruments d'observation d'un système SBSS. A cet effet, il est proposé un procédé selon la revendication 1.

Selon une particularité de l'invention, ladite loi de pointage comporte des directions de pointage successives dudit instrument d'observation s'étendant sur au moins une période orbitale dudit satellite et ladite fenêtre temporelle d'observation s'étend sur une durée égale ou supérieure à une période orbitale.

Ainsi, le procédé de détermination de loi de pointage s'appuie sur une première liste d'objets spatiaux associés à leurs paramètres orbitaux comprenant leurs positions, vitesses, taille et covariance (par exemple des objets spatiaux référencés et/ou déduits d'objets spatiaux référencés par simulation au moyen d'une modèle de fragmentation desdits objets spatiaux référencés). De manière générale, on entend ici par « paramètres orbitaux » toute information permettant de décrire la trajectoire d'un objet spatial (par exemple les paramètres képlériens, le vecteur d'état du centre de masse de l'objet spatial, etc.), mais aussi notamment sa taille permettant d'en déduire sa magnitude visuelle. Sur la base de cette première liste d'objets spatiaux, il est déterminé une deuxième liste d'objets spatiaux qui répondent à un critère d'observabilité et sont ainsi potentiellement observables au cours d'une fenêtre d'observation. Typiquement, pour chaque instant d'intérêt à l'intérieur de cette fenêtre d'observation, et donc pour des positions différentes du satellite au cours de la fenêtre d'observation, il est déterminé quels objets spatiaux sont potentiellement observables. Cette notion d'observabilité suppose par exemple que l'instrument d'observation est potentiellement pointé vers chaque objet spatial considéré, et englobe des considérations telles que :

- la vérification par le calcul que l'objet spatial, par rapport au satellite, n'est pas masqué par la Terre,
- la vérification par le calcul que la direction de l'objet spatial par rapport au satellite, n'est pas éblouie par le Soleil,
- la vérification par le calcul que l'objet spatial est éclairé par le Soleil, notamment par rapport aux positions de la Terre et de la Lune,
- la vérification par le calcul que la magnitude visuelle apparente de l'objet spatial permet à l'instrument d'observation du satellite de le détecter.

Ensuite, il est proposé de déterminer pour chaque satellite une distribution spatio-temporelle des objets spatiaux potentiellement observables au cours du temps sur la fenêtre temporelle d'observation. Une telle distribution spatio-temporelle décrit, par exemple, pour chaque direction de pointage par rapport au satellite (distribution « spatiale ») et chaque instant (distribution « temporelle ») de la fenêtre temporelle d'observation, une grandeur représentative d'une densité des objets spatiaux potentiellement observables dans cette direction de pointage depuis ledit satellite à cet instant de la fenêtre temporelle d'observation. Il est par exemple déterminé un ensemble de directions avec des probabilités associées de rencontrer des objets spatiaux potentiellement observables au cours d'une fenêtre d'observation. Avantageusement, la distribution spatio-temporelle est par exemple déterminée dans un repère d'observation qui dépend à tout instant de la direction du Soleil et de la direction de la Terre par rapport au satellite. En effet, le Soleil et la Terre sont déterminants pour l'observabilité des objets spatiaux et correspondent à des directions vers lesquelles il n'est généralement pas possible d'observer les objets spatiaux (masquage par la Terre, éblouissement par le Soleil) et qui sont à éviter. En positionnant le repère d'observation par rapport aux directions du Soleil et de la Terre et centré sur le satellite (déduites des paramètres orbitaux dudit satellite), c'est-à-dire en choisissant un repère d'observation dans lequel les directions du Soleil et de la Terre varient peu au cours du temps dans ledit repère d'observation, alors on assure que les directions d'objets spatiaux observables sont concentrées dans des plages d'angles solides limitées. Dans un tel repère d'observation, il est donc plus aisé de déterminer des lois de pointage pour la détection d'objets spatiaux.

La loi de pointage de l'instrument d'observation du satellite est par exemple ensuite déterminée, sur la fenêtre temporelle d'observation et dans le repère d'observation, en fonction de la distribution spatio-temporelle des objets spatiaux observables depuis ledit satellite. La loi de pointage s'étend sur une fenêtre temporelle limitée, égale ou étendue, par rapport à la fenêtre temporelle d'observation utilisée pour le calcul de la distribution spatio-temporelle. La loi de pointage qui utilise les objets spatiaux observables se base par exemple sur des probabilités d'observation. Certains objets spatiaux de la deuxième liste peuvent notamment être des objets probables ajoutés à des objets référencés.

Le procédé de détermination de la loi de pointage selon l'invention peut comporter en outre, de manière optionnelle, l'une ou plusieurs des caractéristiques suivantes.

Selon une autre particularité de l'invention, la première liste d'objets spatiaux associés à leurs paramètres orbitaux est obtenue à partir d'une extraction dans un catalogue d'objets spatiaux connus, cette extraction étant ensuite augmentée par au moins une prédiction statistique de nouveaux objets spatiaux à partir d'objets spatiaux connus ou par au moins une simulation de collision physique entre de deux objets spatiaux connus.

Selon une autre particularité de l'invention, la détermination de ladite loi de pointage est réalisée en utilisant une fonction de coût se rapportant aux objets spatiaux potentiellement observés en excluant les objets spatiaux connus revisités et sous contrainte d'une loi mathématique de balayage bornée et paramétrable. La fonction coût aura par exemple pour but de maximiser la découverte d'objets inconnus.

Selon une autre particularité de l'invention, la loi de pointage est sélectionnée parmi une pluralité de lois de pointage candidates, par une évaluation de chaque loi de pointage candidate comportant une estimation, en fonction de la distribution spatio-temporelle, des objets spatiaux non connus potentiellement détectés sur ladite fenêtre temporelle d'observation en appliquant ladite loi de pointage candidate, la loi de pointage candidate sélectionnée étant celle pour laquelle un critère de détection de nouveaux objets spatiaux est vérifié.

Selon une autre particularité de l'invention, le critère est vérifié lorsque le nombre de nouveaux objets spatiaux différents détectés au moins une fois est maximisé.

Selon une autre particularité de l'invention, le critère est vérifié lorsque le nombre de nouveaux objets spatiaux différents revisités un nombre déterminé de fois est maximisé.

L'objectif est notamment d'augmenter la probabilité de détecter de nouveaux objets spatiaux. De telles dispositions permettent en effet d'optimiser le balayage depuis le satellite, puisque les zones denses de la distribution spatio-temporelle sont également des zones dans lesquelles la probabilité de détecter de nouveaux objets spatiaux est plus élevée. Cela découle notamment du fait que de nombreux nouveaux objets spatiaux proviennent de la fragmentation d'objets spatiaux référencés. Le critère de détection peut également, dans certains cas, inclure une contrainte de revisite, par exemple en maximisant le nombre de nouveaux objets spatiaux différents détectés un nombre déterminé de fois.

Un objet spatial est par exemple considéré comme détecté lorsqu'un critère déterminé de détectabilité est vérifié.

Selon une autre particularité de l'invention, une pluralité de distributions spatio-temporelles et une pluralité de lois de pointage sont déterminées pour respectivement une pluralité de satellites, le critère de détection d'objets spatiaux étant un critère de détection globale par ladite pluralité de satellites.

Selon une autre particularité de l'invention, les lois de pointage candidates sont définies par au moins une loi de pointage paramétrable et correspondent à des valeurs candidates respectives différentes de paramètres de l'au moins une loi de pointage paramétrable.

Selon une autre particularité de l'invention, l'au moins une loi de pointage paramétrable comporte l'une parmi :

- une loi sinusoïdale,
- une loi harmonique,
- une loi continue par morceaux,
- une loi polynomiale,
- une loi basée sur des fonctions splines.

Selon une autre particularité de l'invention, la distribution spatio-temporelle est réalisée dans un repère satellite déterminé, dit repère d'observation, le repère d'observation variant au cours du temps en fonction d'une direction du Soleil et d'une direction de la Terre par rapport audit satellite, ladite loi de pointage étant également déterminée dans le repère d'observation.

Selon une autre particularité de l'invention, le repère d'observation comporte trois axes orthogonaux, deux desdits trois axes étant à tout instant agencés dans un plan défini par une direction satellite-Terre et une direction Soleil-satellite.

Selon une autre particularité de l'invention, le repère d'observation comporte :

- un premier axe orienté suivant la direction satellite-Terre,
- un deuxième axe orienté suivant la projection orthogonale de la direction Soleil-satellite dans un plan orthogonal au premier axe,
- un troisième axe orthogonal au premier axe et au deuxième axe.

Selon une autre particularité de l'invention, un autre repère d'observation comporte :

- un premier axe orienté suivant la projection orthogonale de la direction satellite-Terre dans un plan orthogonal à un deuxième axe orienté suivant la direction Soleil-satellite,
- un troisième axe orthogonal au premier axe et au deuxième axe.

Selon une autre particularité de l'invention, la loi de pointage comporte également une orientation de l'instrument d'observation en lacet autour de chaque direction de pointage dudit instrument d'observation. En effet, une loi de pointage correspond principalement à un contrôle deux-axes de l'orientation de l'instrument d'observation, mais il est également possible, dans certains cas, d'effectuer un contrôle trois-axes en contrôlant également l'orientation de l'instrument d'observation autour de la direction de pointage.

Selon un exemple qui n'est pas couvert par l'étendue des revendications, il est également proposé un procédé de détermination d'au moins une loi de pointage d'un instrument d'observation d'au moins un satellite en orbite terrestre pour la recherche de nouveaux objets spatiaux en orbite terrestre, ladite loi de pointage comportant des directions de pointage successives dudit instrument d'observation sur une fenêtre temporelle d'au moins une période orbitale dudit satellite, la loi de pointage étant déterminée dans un repère centré sur ledit satellite, dit repère d'observation, comportant trois axes orthogonaux, deux desdits trois axes sont à tout instant agencés dans un plan défini par une direction satellite-Terre et une direction Soleil-satellite, ledit repère d'observation définissant des angles en azimut et en élévation, et ledit procédé de détermination comportant une détermination, sur la fenêtre temporelle et en fonction de paramètres orbitaux de l'au moins un satellite :

- d'une première bande exclue en azimut et d'une seconde bande exclue en azimut déterminant entre elles une bande autorisée en azimut qui correspond à une plage angulaire fonction du temps comportant uniquement des directions de pointage en azimut qui, au cours de la fenêtre temporelle, sont observables vis-à-vis de la Terre et du Soleil,
- d'une première bande exclue en élévation et d'une seconde bande exclue en élévation déterminant entre elles une bande autorisée en élévation qui correspond à une plage angulaire fonction du temps comportant uniquement des directions de pointage en élévation qui, au cours de la fenêtre temporelle, sont observables vis-à-vis de la Terre et du Soleil,

dans lequel la loi de pointage déterminée comporte une loi de pointage en azimut comportant uniquement des directions de pointage en azimut à l'intérieur de la bande autorisée en azimut et une loi de pointage en élévation comportant uniquement des directions de pointage en élévation à l'intérieur de la bande autorisée en élévation.

Le procédé de détermination de la loi de pointage peut comporter en outre, de manière optionnelle, l'une ou plusieurs des caractéristiques suivantes, prises isolément ou selon toutes les combinaisons techniquement possibles.

Selon une autre particularité de l'exemple qui n'est pas couvert par l'étendue des revendications, une direction de pointage est considérée comme observable vis-à-vis de la Terre et du Soleil lorsqu'une zone pointée par ladite direction de pointage est éclairée par le Soleil et n'est pas masquée par la Terre, et lorsque l'instrument d'observation dirigé selon ladite direction de pointage n'est pas ébloui par le Soleil.

Selon une autre particularité de l'exemple qui n'est pas couvert par l'étendue des revendications, la bande autorisée en azimut est choisie de largeur angulaire constante au cours de la fenêtre temporelle et/ou la bande autorisée en élévation est choisie de largeur angulaire constante au cours de la fenêtre temporelle.

Selon une autre particularité de l'exemple qui n'est pas couvert par l'étendue des revendications, le procédé de détermination de la loi de pointage comporte en outre :

- la détermination de la bande autorisée en azimut et de la bande autorisée en élévation
- une détermination, à partir d'une première liste d'objets spatiaux associés à leurs paramètres orbitaux, d'une deuxième liste d'objets spatiaux qui sont observables, dans la bande autorisée en azimut et la bande autorisée en élévation, depuis ledit au moins un satellite en orbite terrestre au cours de la fenêtre temporelle d'observation de durée égale ou supérieure à une période orbitale, un critère d'observabilité étant vérifié en fonction au moins de paramètres orbitaux des objets spatiaux de la première liste et des paramètres orbitaux de l'au moins un satellite,
- une détermination d'une distribution spatio-temporelle des objets spatiaux observables au cours de la fenêtre temporelle d'observation depuis ledit au moins un satellite.

Un autre objet de l'invention concerne un procédé de recherche de nouveaux objets spatiaux par au moins un satellite en orbite terrestre, ledit au moins un satellite comportant un instrument d'observation, comportant :

- une détermination d'une loi de pointage de l'instrument d'observation dudit au moins un satellite, selon un procédé de détermination d'une loi de pointage selon l'invention,
- un contrôle, en fonction de la loi de pointage, du pointage de l'instrument d'observation, et acquisition d'images par ledit instrument d'observation, sur au moins une période orbitale,
- une recherche de nouveaux objets spatiaux dans les images acquises par l'instrument d'observation.

Selon une autre particularité de l'invention, la loi de pointage est mise à jour à la fin de la première fenêtre temporelle d'observation, pour une nouvelle première fenêtre temporelle d'observation.

Selon une autre particularité de l'invention, la première liste d'objets spatiaux est complétée par des objets correspondant à des nouveaux objets spatiaux détectés.

Un autre objet de l'invention concerne un produit programme d'ordinateur comportant des instructions qui, lorsqu'elles sont exécutées par au moins un processeur, configurent ledit au moins un processeur pour mettre en œuvre le procédé de détermination de loi de pointage selon l'invention.

Un autre objet de l'invention concerne un dispositif de calcul d'une loi de pointage comportant au moins un processeur et au moins une mémoire, ledit au moins processeur étant configuré pour mettre en œuvre le procédé de détermination de loi de pointage selon l'invention.

Un autre objet de l'invention concerne un système de surveillance de l'espace depuis l'espace, comportant :

- au moins un satellite en orbite terrestre, ledit au moins un satellite comportant un instrument d'observation,

- un dispositif de calcul d'une loi de pointage selon l'invention.

**Présentation des figures**

L'invention sera mieux comprise à la lecture de la description suivante, donnée à titre d'exemple nullement limitatif, et faite en se référant aux figures qui représentent :

- Figure 1 : une représentation schématique d'un satellite en orbite autour de la Terre, pour la surveillance d'objets spatiaux,
- Figure 2 : un diagramme illustrant les principales étapes d'un exemple de réalisation d'un procédé de détermination de loi de pointage d'un instrument d'observation d'un satellite,
- Figure 3 : une représentation schématique illustrant des variables prises en compte pour évaluer une contrainte de magnitude visuelle apparente,
- Figure 4 : une représentation schématique illustrant des variables prises en compte pour évaluer une contrainte de masquage par la Terre,
- Figure 5 : une représentation schématique illustrant des variables prises en compte pour évaluer une contrainte d'éclairement par le Soleil,
- Figure 6 : une représentation schématique illustrant des variables prises en compte pour évaluer une contrainte d'absence d'éblouissement,
- Figure 7 : une représentation schématique d'un exemple de repère d'observation associé à un satellite,
- Figure 8 : une représentation schématique d'un exemple de distribution spatio-temporelle dans un espace discrétisé en [azimut, élévation],
- Figure 9 : une représentation schématique d'un exemple de distribution spatio-temporelle et d'une loi de pointage,
- Figure 10 : un diagramme illustrant les principales étapes d'un autre exemple de réalisation d'un procédé de détermination de loi de pointage d'un instrument d'observation d'un satellite, cet exemple n'étant pas couvert par l'étendue des revendications,
- Figure 11 : un exemple de procédé selon l'invention.

Dans ces figures, des références identiques d'une figure à une autre désignent des éléments identiques ou analogues. Pour des raisons de clarté, les éléments représentés ne sont pas à l'échelle, sauf mention contraire.

En outre, l'ordre des étapes indiqué sur ces figures est donné uniquement à titre d'exemple non limitatif de la présente divulgation qui peut être appliquée avec les mêmes étapes exécutées dans un ordre différent.

**Description des modes de réalisation**

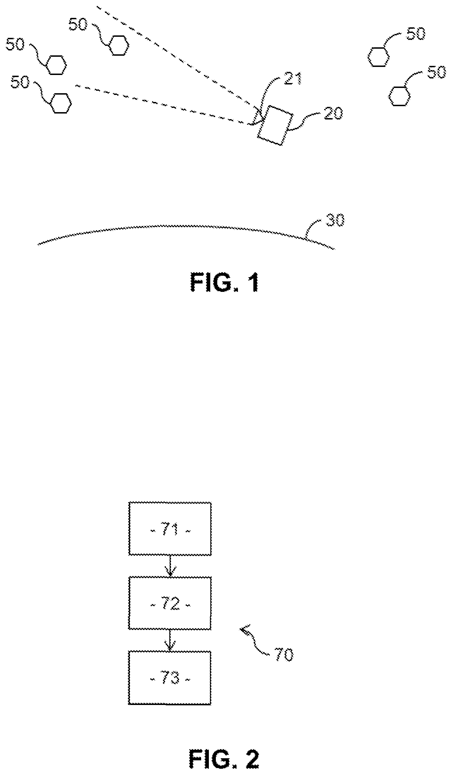

La figure 1 représente schématiquement un satellite 20 en orbite autour de la Terre 30. De préférence, le satellite 20 est placé sur une orbite défilante, c'est-à-dire non géostationnaire (« geostationary orbit » ou GEO), par exemple une orbite basse (LEO) ou une orbite moyenne (« medium earth orbit » ou MEO). Rien n'exclut cependant, dans certains cas, de considérer une orbite géosynchrone (« geosynchronous orbit » ou GSO) telle qu'une orbite GEO. L'orbite du satellite 20 est de préférence une orbite circulaire. Rien n'exclut cependant, suivant d'autres exemples, de considérer d'autres types d'orbites, notamment des orbites elliptiques.

Tel qu'indiqué ci-dessus, le satellite 20 est mis en œuvre pour surveiller l'espace, et notamment des objets spatiaux 50 en orbite terrestre. Les objets spatiaux 50 à rechercher correspondent ici principalement à des objets spatiaux artificiels non contrôlés, tels que des débris spatiaux. A des fins de clarté, la figure 1 ne montre que quelques objets spatiaux 50, mais plusieurs centaines de milliers d'objets spatiaux orbitent autour de la Terre 30.

Le satellite 20 est mis en œuvre pour surveiller des objets spatiaux 50 en orbite terrestre. Il est à noter que l'orbite terrestre du satellite 20 et les orbites terrestres des objets spatiaux peuvent présenter des caractéristiques différentes. Par exemple, le satellite 20 peut être mis en œuvre pour surveiller des objets spatiaux 50 sur des orbites terrestres d'altitudes supérieures à l'altitude de l'orbite terrestre dudit satellite 20. En outre, la figure 1 ne représente qu'un seul satellite 20, mais la présente divulgation est également applicable à une pluralité de satellites 20 de surveillance de l'espace.

Le satellite 20 peut ici être mis en œuvre pour surveiller des objets spatiaux non référencés (c'est-à-dire rechercher de nouveaux objets spatiaux non connus *a priori)*. A cet effet, le satellite 20 comporte un instrument d'observation 21 adapté à acquérir des images. L'instrument d'observation 21 comporte, de manière connue en soi, des moyens d'acquisition optiques passifs configurés pour capter le flux optique reçu dans un champ de vue dudit instrument d'observation 21, autour d'une ligne de visée dudit instrument d'observation 21. Les moyens d'acquisition optiques passifs comportent par exemple au moins un détecteur linéaire ou matriciel, sensible dans une ou plusieurs bandes de longueurs d'ondes comprises de préférence dans le domaine de longueurs d'ondes visibles et/ou proche infrarouge (de $0.4\ \mu m$ à $0.8\mu m$).

L'instrument d'observation 21 est par exemple dédié à la surveillance de l'espace. Dans certains cas, l'instrument d'observation 21 peut en outre être mis en œuvre dans le cadre d'une mission d'observation de la Terre 30.

La figure 2 représente schématiquement les principales étapes d'un procédé 70 de détermination d'au moins une loi de pointage de l'instrument d'observation 21 du satellite 20, pour la surveillance de l'espace.

Le procédé 70 de détermination est par exemple mis en œuvre par un dispositif de calcul (non représenté sur les figures). Le dispositif de calcul comporte par exemple un ou plusieurs processeurs (CPU, DSP, FPGA, ASIC, etc.). Dans le cas de plusieurs processeurs, ceux-ci peuvent être intégrés dans un même équipement et/ou intégrés dans des équipements matériellement distincts. Le dispositif de calcul comporte également une ou plusieurs mémoires (disque dur magnétique, mémoire électronique, disque optique, etc.) dans lesquelles est par exemple mémorisé un produit programme d'ordinateur, sous la forme d'un ensemble d'instructions de code de programme à exécuter par le ou les processeurs pour mettre en œuvre les différentes étapes du procédé 70 de détermination de loi de pointage.

Une loi de pointage correspond à des directions de pointage successives dudit instrument d'observation 21 (c'est-à-dire sur lesquelles ledit instrument d'observation 21 doit successivement aligner sa ligne de visée) sur une ou plusieurs périodes orbitales. Dans la suite de la description, on se place de manière non-limitative dans le cas où le satellite 20 se trouve en orbite défilante, de sorte que le satellite 20 se déplace par rapport à la Terre 30 au cours de la fenêtre temporelle. Il est à noter que, une fois la loi de pointage déterminée, celle-ci peut être répétée de manière périodique pour contrôler la ligne de visée de l'instrument d'observation 21. La loi est calculée à partir d'une distribution calculée sur une fenêtre temporelle d'observation qui s'étend par exemple sur une ou plusieurs orbites. La loi peut ainsi être déterminée sur une période réduite, identique ou étendue par rapport à la fenêtre temporelle d'observation. Par exemple, la fenêtre temporelle d'observation peut correspondre à une période orbitale du satellite 20 et la loi de pointage déterminée peut prévoir une répétition d'une séquence de pointage s'étendant sur plusieurs périodes orbitales. De manière générale, la fenêtre temporelle est de durée adaptée à permettre l'acquisition, par l'instrument d'observation 21, de plusieurs images au cours d'au moins une orbite. Par exemple, la loi de pointage s'étend sur une durée égale ou supérieure à la période orbitale du satellite 20.

Le procédé 70 de détermination utilise par exemple une première liste d'objets spatiaux 50 associés à leurs paramètres orbitaux. Un objet spatial correspond par exemple à un objet spatial référencé (connu *a priori)*. Un objet spatial 50 peut également correspondre à un objet spatial généré par simulation, en appliquant des modèles de fragmentation à des objets spatiaux référencés (y compris d'autres satellites dans ce cas). Les objets spatiaux référencés sont par exemple des objets spatiaux issus du catalogue MASTER (« meteoroid and space debris terrestrial environment reference »), qui est divisé en quatre types d'orbites : LEO, MEO, GEO et autres (orbites à fortes excentricités).

La première liste des objets spatiaux est par exemple établie en fonction des besoins de la mission de surveillance de l'espace. Par exemple, les objets spatiaux 50 de la première liste peuvent correspondre à des objets spatiaux 50 placés sur des orbites terrestres spécifiques. Suivant un autre exemple, les objets spatiaux 50 de la première liste peuvent correspondre à des objets spatiaux 50 qui sont difficilement observables depuis la Terre 30, etc.

Tel qu'illustré par la figure 2, le procédé 70 de détermination comporte par exemple une étape 71 de détermination, parmi les objets spatiaux 50 de la première liste, des objets spatiaux 50 qui sont potentiellement observables depuis un satellite 20 au cours d'une fenêtre d'observation de durée égale ou supérieure à une période orbitale du satellite. En pratique, la fenêtre d'observation s'étend par exemple sur une ou plusieurs orbites et la loi d'observation s'étend également sur une ou plusieurs orbites.

Les objets spatiaux 50 observables au cours de la fenêtre d'observation sont par exemple déterminés en fonction au moins de paramètres orbitaux des objets spatiaux 50 de la première liste et de paramètres orbitaux de l'au moins un satellite 20. Les paramètres orbitaux des objets spatiaux 50 et de l'au moins un satellite 20 permettent par exemple de déterminer, dans un même repère (par exemple centré sur la Terre 30), les positions desdits objets spatiaux 50 et de l'au moins un satellite 20 pour tout instant à l'intérieur de la fenêtre d'observation considérée, ainsi que les positions de la Terre 30 et du Soleil (et optionnellement la Lune) par rapport aux objets spatiaux 50 et à l'au moins un satellite 20.

Par conséquent, les paramètres orbitaux permettent de déterminer notamment si un objet spatial 50 vérifie à un instant donné des contraintes d'observabilité géométriques par rapport au satellite 20 considéré. Par exemple, un objet spatial 50 est observable depuis le satellite 20 s'il n'est pas masqué par la Terre 30, s'il est éclairé par le Soleil et si la direction de pointage depuis le satellite 20 n'est pas éblouie par le Soleil.

Les objets spatiaux 50 observables sont par exemple en outre déterminés en fonction d'informations complémentaires permettant de calculer, pour chaque objet spatial 50, une magnitude visuelle apparente dudit objet spatial 50. Il peut s'agir par exemple d'un albédo et d'une surface pour chaque objet spatial 50. Il est à noter que la magnitude visuelle apparente dépend également d'une distance entre l'objet spatial 50 et le satellite 20, et d'un angle de phase par rapport au Soleil qui peuvent être déterminés à partir des paramètres orbitaux.

Alternativement ou en complément, il est également possible de prendre par exemple en compte une vitesse angulaire relative entre l'objet spatial 50 et le satellite 20, qui peut être déterminée à partir des paramètres orbitaux, et qui influence également la capacité de l'instrument d'observation 21 à détecter l'objet spatial 50. Toutefois, c'est la vitesse angulaire relative apparente, c'est-à-dire la vitesse angulaire relative entre l'objet spatial 50 et la ligne de visée de l'instrument d'observation 21 (qui dépend en outre d'une vitesse de rotation du satellite 20 sur lui-même et donc, *in fine,* de la loi de pointage que l'on cherche à déterminer), qui est la plus pertinente pour évaluer la capacité de l'instrument d'observation 21 à détecter l'objet spatial 50. Rien n'exclut cependant, de prendre en compte la vitesse angulaire relative au cours de l'étape 71 de détermination de la deuxième liste, même si cela conduit potentiellement à considérer comme non observable un objet spatial 50 de vitesse angulaire relative trop importante alors que cet objet spatial pourrait être rendu détectable par une vitesse de rotation du satellite 20 sur lui-même qui conduirait à obtenir une vitesse angulaire relative apparente moins importante.

De manière générale, l'étape 71 de détermination de la deuxième liste vise donc à identifier les objets spatiaux 50 qui pourraient être potentiellement observés au cours de la fenêtre d'observation. Un objet spatial 50 étant observable à un instant donné de la fenêtre d'observation si, en supposant la ligne de visée de l'instrument d'observation 21 pointée vers ledit objet spatial 50 par rapport au satellite 20 à cet instant, des contraintes d'observabilité sont vérifiées. Les contraintes d'observabilité sont par exemple géométriques, et peuvent comprendre également des contraintes liées à la magnitude visuelle apparente de l'objet spatial 50 et/ou à la vitesse angulaire relative dudit objet spatial 50.

Si l'on considère un nombre $N_{sat}$ de satellites 20 ($N_{sat}$ pouvant être égal à 1), alors il est possible de décrire le satellite 20 d'indice $k$ ($1 \leq k \leq N_{sat}$) par son vecteur d'état $x_k$ composé des six paramètres képlériens (paramètres orbitaux) usuels ($a_k$, $e_k$, $i_k$, $\omega_k$, $\Omega_k$, $M_k$) défini à une date $t_k$. Pour chaque instant $t_i$ considéré dans la fenêtre d'observation, les positions $r_k(t_i)$ et vitesses $v_k(t_i)$ du satellite 20 d'indice k peuvent être propagées en modélisant les lois de la mécanique spatiale (fonction *propagate* ci-dessous) :

$$(r_k(t_i), v_k(t_i)) = propagate(x_k, t_i - t_k)$$

Les positions $r_k(t_i)$ et vitesses $v_k(t_i)$ sont par exemple exprimées dans un repère centré sur la Terre 30, la position $r_k(t_i)$ étant un vecteur allant du centre de la Terre 30 jusqu'au satellite 20 d'indice k. Il va de soi que le choix d'un repère particulier pour évaluer l'observabilité des objets spatiaux 50 n'est absolument pas limitatif de la présente divulgation.

De la même manière, si l'on considère $N_{obj}$ objets spatiaux 50, alors il est possible de décrire l'objet spatial 50 d'indice $l$ ($1 \leq l \leq N_{obj}$) par son vecteur d'état $x_l$ composé des six paramètres képlériens (paramètres orbitaux) usuels $x_l = (a_l,$ $e_l, i_l, \omega_l, \Omega_l, M_l)$ défini à une date $t_l$. Pour chaque instant $t_i$ considéré dans une fenêtre temporelle d'observation, les positions $r_l(t_i)$ (vecteur) et vitesses $v_l(t_i)$ de l'objet spatial 50 d'indice $l$, dans le repère considéré centré sur la Terre 30, peuvent être propagées en modélisant les lois de la mécanique spatiale :

$$(r_l(t_i), v_l(t_i)) = propagate(x_l, t_i - t_l)$$

Nous associons également à l'objet spatial 50 d'indice $l$ un albédo $\rho_l$ et une surface $A_l$.

Nous désignons par $r_{sun}$ le vecteur donnant la position du Soleil 40 dans le repère considéré centré sur la Terre 30.

Tel qu'indiqué ci-dessus, à chaque instant $t_i$ dans la fenêtre d'observation, un objet spatial 50 d'indice $l$ est considéré comme observable par un satellite 20 d'indice k s'il respecte par exemple un ensemble $\Lambda$ de contraintes d'observabilité $c_j$, $\Lambda = \{c_j\}$.

Finalement, il est possible d'associer pour chaque satellite 20 d'indice k à chaque instant $t_i$, un ensemble $O_k(t_i)$ d'objets spatiaux 50 observables tel que:

$$O_k(t_i) = \left\{ l \ / \prod_{c_j \in \Lambda} c_j(k, l, t_i) = 1 \right\}$$

expression dans laquelle la contrainte d'observabilité $c_j$ vaut 1 si l'objet spatial 50 considéré est observable vis-à-vis de cette contrainte, 0 sinon. Un tel ensemble $O_k(t_i)$ peut être déterminé pour chaque instant $t_i$ considéré dans la fenêtre d'observation, et pour chaque satellite 20.

Tel qu'indiqué ci-dessus, il est possible de considérer plusieurs types de contraintes d'observabilité. On considère de manière non limitative le cas où l'ensemble $\Lambda$ repose par exemple sur un ensemble de 4 contraintes:

$$\Lambda = \left\{ c_{magnitude}, c_{masquage}, c_{eclipse}, c_{angle\ garde} \right\}$$

Nous donnons ci-après des exemples non limitatifs de modèles pouvant être utilisés pour évaluer ces contraintes d'observabilité.

Contrainte de magnitude visuelle apparente

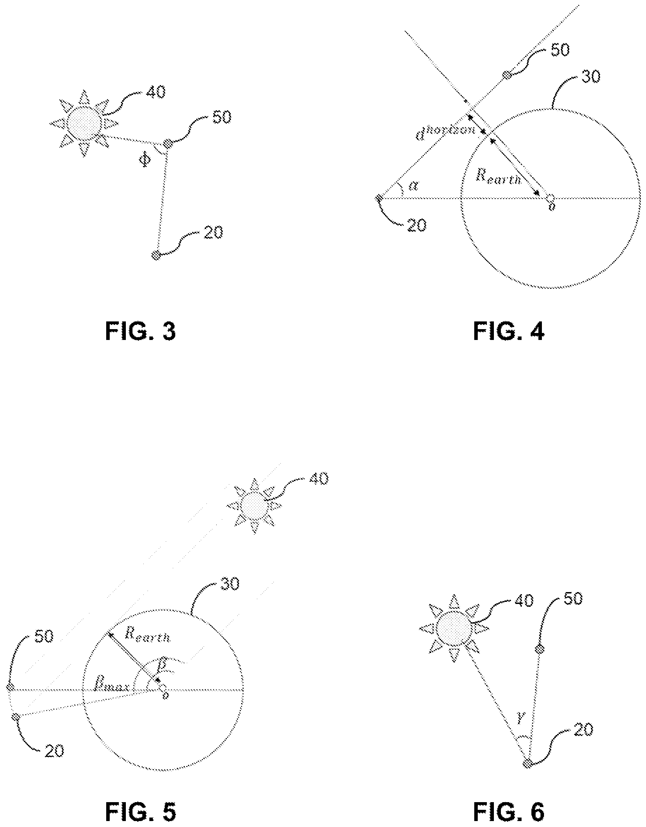

La figure 3 représente schématiquement l'angle de phase entre le Soleil 40, un objet spatial 50 et un satellite 20. Nous désignons par $d_{k,l}(t_i) = |r_l(t_i) - r_k(t_i)|$ la distance entre l'objet spatial 50 d'indice $l$ et le satellite 20 d'indice $k$ à l'instant $t_i$. L'angle de phase entre la direction Soleil-objet spatial et la direction satellite-objet spatial est défini par :

$$\phi_{k,l}(t_i) = acos\left(\frac{r_k(t_i) - r_l(t_i)}{d_{k,l}(t_i)} \cdot \frac{r_{sun}(t_i) - r_l(t_i)}{|r_{sun}(t_i) - r_l(t_i)|}\right)$$

Avec un modèle de diffusion sphérique lambertien :

$$F_{spherical}(\phi) = \frac{2}{3\pi^2}\left((\pi - \phi)cos(\phi) + sin(\phi)\right)$$

la magnitude visuelle apparente $M_{k,l}(t_i)$ peut alors s'écrire :

$$M_{k,l}(t_i) = C - 2.5\log_{10}\left(A_l\rho_l F_{spherical}(\phi_{k,l}(t_i))\right) + 5log_{10}\left(d_{k,l}(t_i)\right)$$

expression dans laquelle C à la magnitude visuelle apparente du Soleil, qui vaut en moyenne -26.74 au sommet de l'atmosphère (« Top of Atmosphere » ou TOA dans la littérature anglo-saxonne) sur Terre.

La contrainte de magnitude visuelle apparente $c_{magnitude}$ est par exemple vérifiée si la magnitude visuelle apparente respecte un seuil de détection de l'instrument d'observation 21.

Tel qu'indiqué ci-dessus, il est également possible de prendre en compte la vitesse angulaire relative $w_{k,l}(t_i)$ de l'objet spatial 50 par rapport au satellite 20 :

$$w_{k,l}(t_i) = \left|\frac{(r_k(t_i) - r_l(t_i)) \times (v_k(t_i) - v_l(t_i))}{d_{k,l}(t_i)^2}\right|$$

Dans un tel cas, la contrainte de magnitude visuelle apparente $c_{magnitude}$ est par exemple vérifiée si le couple ($M_{k,l}(t_i)$, $w_{r,l}(t_i)$) respecte un seuil de détection de l'instrument d'observation 21. Typiquement, plus la magnitude visuelle apparente est élevée et plus la vitesse angulaire relative doit être faible pour que l'objet spatial 50 puisse être observé/détecté par l'instrument d'observation 21, et inversement).

Contrainte de masquage par la Terre

La figure 4 représente schématiquement un objet spatial 50, un satellite 20 et la Terre 30, et certaines variables permettant d'évaluer la contrainte de masquage par la Terre 30.

Nous désignons par $\alpha_{k,l}(t_i)$ l'angle entre la direction satellite-objet spatial et la direction satellite-Terre :

$$\alpha_{k,l}(t_i) = acos\left(\frac{r_k(t_i) - r_l(t_i)}{d_{k,l}(t_i)} \cdot \frac{-r_k(t_i)}{|r_k(t_i)|}\right)$$

La distance de la direction satellite-objet spatial à l'horizon terrestre peut alors être calculée comme suit :

$$d^{horizon}{}_{k,l}(t_i) = |r_k(t_i)|sin(\alpha_{k,l}(t_i)) - (R_{earth})$$

expression dans laquelle $R_{earth}$ correspond au rayon de la Terre 30 (qui peut également englober l'épaisseur de l'atmosphère).

La contrainte de masquage par la Terre $c_{masquage}$ peut alors être considérée comme vérifiée si $cos(\alpha_{k,l}(t_i)) < 0$, ou si $|r_k(t_i)|^2 - (R_{earth} + d^{horizon}{}_{k,l}(t_i))^2 > d_{k,l}(t_i)^2$, ou encore si $d^{horizon}{}_{k,l}(t_i) > 0$.

Contrainte d'éclairement (ou d'absence d'éclipse)

La figure 5 représente schématiquement un objet spatial 50, un satellite 20, la Terre 30 et le Soleil 40, et certaines variables permettant d'évaluer la contrainte d'éclairement par le Soleil 40.

Nous désignons par $\beta_l(t_i)$ l'angle entre les directions du Soleil et de l'objet spatial 50 vus depuis la Terre 30 :

$$\beta_l(t_i) = acos\left(\frac{r_{sun}(t_i)}{|r_{sun}(t_i)|} \cdot \frac{r_l(t_i)}{|r_l(t_i)|}\right)$$

L'angle maximum admissible, au-dessous duquel la Terre 30 n'occulte pas les rayons solaires dirigés vers l'objet spatial 50, se calcule par $\beta_l^{max} = \frac{\pi}{2} acos\left(\frac{R_{earth}}{|r_l(t_i)|}\right)$.

La contrainte d'éclairement (ou d'absence d'éclipse) $c_{eclipse}$ peut donc être considérée comme vérifiée si $\beta_l(t_i) < \beta_l^{max}$.

Contrainte d'absence d'éblouissement

La figure 6 représente schématiquement un objet spatial 50, un satellite 20 et le Soleil 40, et certaines variables permettant d'évaluer la contrainte d'absence d'éblouissement par le Soleil 40.

Nous désignons par $\gamma_{k,l}(t_i)$ l'angle entre la direction satellite-objet spatial et la direction satellite-Soleil :

$$\gamma_{k,l}(t_i) = acos\left(\frac{r_{sun}(t_i) - r_k(t_i)}{|r_{sun}(t_i) - r_k(t_i)|} \cdot \frac{r_l(t_i) - r_k(t_i)}{|r_l(t_i) - r_k(t_i)|}\right)$$

Il est possible de prédéfinir un angle minimal $\gamma_{min}$, dit angle de garde, au-dessus duquel l'instrument d'observation 21 n'est pas ébloui par le Soleil 40.

La contrainte d'absence d'éblouissement $c_{angle\ garde}$ peut donc être considérée comme vérifiée si $\gamma_{k,l}(t_i) > \gamma_{min}$.

Il est à noter qu'il est également possible, de manière optionnelle, de considérer de tels angles de garde par rapport à d'autres astres, par exemple la Terre 30 et/ou la Lune, ce qui revient à ajouter d'autres contraintes d'observabilité géométriques.

Tel qu'illustré par la figure 2, le procédé 70 de détermination comporte en outre une étape 72 de détermination, sur la fenêtre temporelle et dans un repère satellite, dit repère d'observation, d'une distribution spatio-temporelle des objets spatiaux 50 observables depuis chaque satellite 20.

La distribution spatio-temporelle est déterminée à partir d'un ensemble d'objets spatiaux observables et est ainsi plus pertinente pour la découverte de nouveaux objets spatiaux. En effets, les concentrations d'objets spatiaux connus et observables peuvent influencer la loi d'observation. Les objets spatiaux inconnus répartis dans l'espace sont a priori en effet très dispersés et on ne pourrait pas se permettre de pointer dans l'espace au hasard. De plus ajouter une contrainte d'observabilité permet d'explorer des zones par exemple au voisinage de concentration d'objets spatiaux, que ces concentrations soient ou non observables. La première liste d'objets spatiaux peut en effet être issue d'une extraction d'objets spatiaux connus qui est par exemple ensuite augmentée de façon statistique ou par simulation de collisions physiques. C'est-à-dire que l'augmentation statistique ou physique permet par exemple de générer des objets spatiaux potentiels de différentes tailles et avec différentes trajectoires. Ainsi des objets spatiaux connus, même non observables ou difficilement observables par le satellite, pendant la fenêtre d'observation, peuvent avoir une influence sur la loi de pointage.

La distribution spatio-temporelle décrit, par exemple, pour chaque direction de pointage par rapport au satellite 20 (distribution « spatiale ») et chaque instant (distribution « temporelle ») de la fenêtre temporelle, une grandeur représentative d'une densité de probabilité des objets spatiaux potentiellement observables dans cette direction de pointage depuis ledit satellite 20 à cet instant de la fenêtre temporelle. La grandeur donnée par la distribution spatio-temporelle est par exemple une densité à proprement parler, c'est-à-dire un nombre d'objets spatiaux 50 potentiellement observables (c'est-à-dire potentiellement observables) par unité d'angle solide dans la direction de pointage considérée, ou bien encore un nombre total d'objets spatiaux 50 observables dans un angle solide déterminé (correspondant par exemple au champ de vue de l'instrument d'observation 21) dans lequel se trouve la direction de pointage considérée, etc.

Le repère d'observation associé à un satellite 20 est par exemple un repère orthogonal centré sur le satellite 20, par exemple centré sur un centre de masse dudit satellite 20. Toutefois, le repère d'observation n'est pas lié à une structure dudit satellite 20 (et notamment il est indépendant de la ligne de visée de l'instrument d'observation), de sorte que des axes orthogonaux qui composent ledit repère d'observation peuvent varier au cours du temps par rapport à la structure dudit satellite 20.

Plus particulièrement, le repère d'observation associé à un satellite 20 dépend par exemple à tout instant de la direction du Soleil 40 et de la direction de la Terre 30 par rapport à ce satellite 20. En effet, tel qu'indiqué ci-dessus, le Soleil 40 et la Terre 30 sont déterminants pour l'observabilité des objets spatiaux. En choisissant un repère d'observation dans lequel les directions du Soleil 40 et de la Terre 30 varient peu au cours du temps dans ledit repère d'observation, alors on assure que les directions des objets spatiaux 50 observables sont concentrées dans des plages d'angles solides limitées.

Par exemple deux des trois axes orthogonaux du repère d'observation sont à tout instant agencés dans un plan défini par une direction satellite-Terre (également connue sous le nom de direction Nadir) et une direction Soleil-satellite.

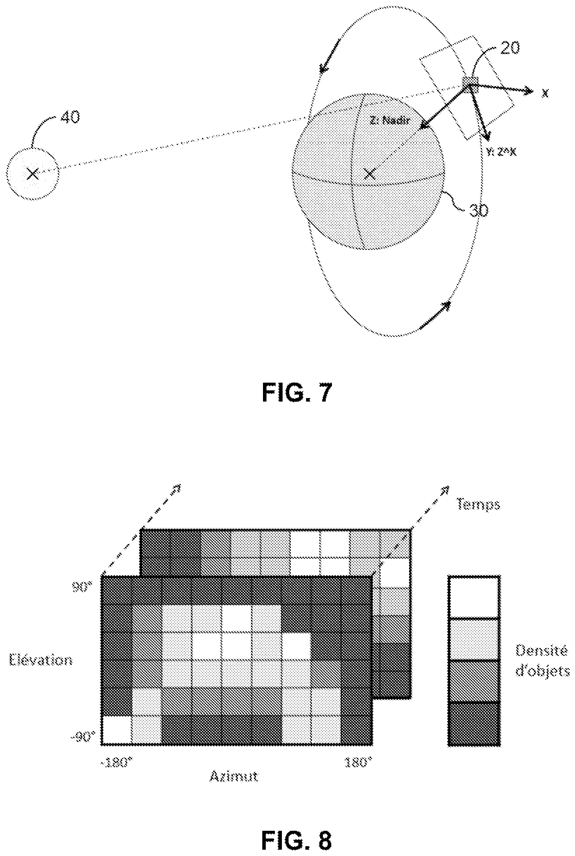

La figure 7 représente schématiquement un exemple non limitatif de repère d'observation comportant :

- un axe Z orienté suivant la direction satellite-Terre,
- un axe X orienté suivant la projection orthogonale de la direction Soleil-satellite dans un plan orthogonal à l'axe Z,
- un axe Y orthogonal aux axes X et Z.

Par conséquent, en référence à la figure 7, le Soleil 40 et la Terre 30 (ou plus particulièrement leurs centres respectifs) se trouvent à tout instant dans le plan XZ. La direction de l'axe Z permet de concentrer les objets spatiaux 50 observables autour du plan XY du fait de la contrainte de masquage par la Terre 30. L'axe X étant la projection orthogonale de la direction Soleil-satellite dans le plan XY, les objets spatiaux 50 observables se répartissent autour de l'axe X du fait des contraintes d'absence d'éblouissement et de magnitude visuelle apparente. Par conséquent, le calage du repère d'observation par rapport à la Terre 30 et au Soleil 40 permet de conserver des directions moyennes d'observation à haute valeur ajoutée stationnaires au cours de la fenêtre d'observation notamment par rapport à la position sur orbite du satellite 20 et à la dérive de cette dernière.

Dans le repère centré sur la Terre 30 considéré précédemment, les axes X, Y et Z de la figure 7 peuvent être exprimés comme suit pour le satellite 20 d'indice k à l'instant $t_i$ :

$$Z_k(t_i) = -\frac{r_k(t_i)}{|r_k(t_i)|}$$

$$Y_k(t_i) = Z_k(t_i) \wedge \left(-\frac{r_{sun}(t_i)}{|r_{sun}(t_i)|}\right)$$

$$X_k(t_i) = Y_k(t_i) \wedge Z_k(t_i)$$

expressions dans lesquelles $\wedge$ correspond au produit vectoriel.

Nous pouvons alors définir une matrice de changement de repère permettant de passer du repère centré sur la Terre 30 au repère d'observation, pour chaque satellite 20 d'indice k et pour chaque instant $t_i$ :

$$M_{loc}(t_i, r_k, r_{sun}) = [X_k(t_i), Y_k(t_i), Z_k(t_i)]$$

A la suite de l'étape 71 de détermination de la deuxième liste d'objets spatiaux observables, un ensemble $O_k$ d'objets spatiaux 50 observables est associé à chaque satellite 20 d'indice k pour chaque instant $t_i$ considéré dans la fenêtre d'observation.

Pour chaque satellite 20 d'indice k, l'ensemble des directions $C_k(t_i)$ depuis lesquelles il lui est possible d'observer un objet spatial 50 observable sont donc définies par :

$$\forall t_i, \forall l \in O_k(t_i) \ C_k(t_i) = \{r_l(t_i) - r_k(t_i)\} = \left\{\left[x_{k,l}(t_i), y_{k,l}(t_i), z_{k,l}(t_i)\right]\right\}$$

Ces ensembles de vecteurs qui ont tous pour origine un satellite 20 d'indice k, constituent les directions de pointage à haute valeur ajoutée sur lesquelles il peut être intéressant d'aligner la ligne de visée de l'instrument d'observation 21 pour maximiser les chances de détection de nouveaux objets spatiaux. Ces vecteurs peuvent être ramenés dans le repère d'observation du satellite 20 d'indice k au moyen des matrices de changement de repère $M_{loc}$ $(t_i, r_k, r_{sun})$:

$$\forall t_i, \forall l \in O_k(t_i) \ C_k^{loc}(t_i) = \left\{ M_{loc}(t_i, r_k, r_{sun}) \left[ x_{k,l}(t_i), y_{k,l}(t_i), z_{k,l}(t_i) \right] \right\}$$

Il est avantageusement plus simple, dans ce type de repère, de réaliser des calculs pour la loi de pointage sur des ensembles à haute valeur ajoutée.

D'autres repères d'observation sont par exemple envisageables. En particulier, il est par exemple possible d'utiliser un repère d'observation dont deux des trois axes orthogonaux sont à tout instant agencés dans un plan défini par une direction satellite-Terre et une direction Soleil-satellite.

Un autre exemple non limitatif de repère d'observation possible est par exemple tel que :

- l'axe $X$ est orienté suivant la direction Soleil-satellite,
- l'axe $Z$ est orienté suivant la projection orthogonale de la direction satellite-Terre dans un plan orthogonal à l'axe $X$,
- l'axe $Y$ est orthogonal aux axes $X$ et $Z$.

Par exemple, la distribution spatio-temporelle est déterminée en convertissant les directions de pointage $C_k^{loc}$ en coordonnées polaires $D_k^{loc}$, par exemple en [azimut, élévation]. On désigne par $[x'_{k,l}(t_i), y'_{k,l}(t_i), z'_{k,l}(t_i)]$ les coordonnées $M_{loc}(t_i, r_k, r_{sun})[x_{k,l}(t_i), y_{k,l}(t_i), z_{k,l}(t_i)]$. Les directions de pointage $D_k^{loc}$ en coordonnées polaires $[az_{k,l}(t_i), el_{k,l}(t_i)]$ sont par exemple obtenues comme suit :

$$\forall k, \forall t_i, \forall \left[ x'_{k,l}(t_i), y'_{k,l}(t_i), z'_{k,l}(t_i) \right] \in C_k^{loc}(t_i), D_k^{loc}(t_i) =$$

$$\left[ az_{k,l}(t_i) = atan\left( \frac{y'_{k,l}(t_i)}{x'_{k,l}(t_i)} \right), el_{k,l}(t_i) = asin\left( \frac{z'_{k,l}(t_i)}{\left| \left[ x'_{k,l}(t_i), y'_{k,l}(t_i), z'_{k,l}(t_i) \right] \right|} \right) \right]$$

Par convention, l'angle d'azimut balaye [-180°,180°] et l'angle d'élévation balaye [-90°, 90°].

Pour chaque satellite 20 d'indice $k$ et chaque ensemble $D_k^{loc}$ associé de directions de pointage d'objets spatiaux 50 observables, il est alors possible, suivant un exemple non limitatif de mise en œuvre, de calculer la distribution spatio-temporelle sous la forme d'un histogramme en discrétisant les directions de pointage [azimut, élévation]. La figure 8 représente schématiquement un exemple d'espace discrétisé en [azimut, élévation]. De même, les instants $t_i$ de la fenêtre d'observation peuvent être discrétisés. Chaque pas de grille de l'espace discrétisé est de dimensions [*Δaz,Δel*]. Ces dimensions correspondent par exemple, dans certains modes de mise en œuvre, aux dimensions du champ de vue de l'instrument d'observation 21.

Ces histogrammes $HIST_k$ sont par exemple calculés comme suit :

$$\forall k, \forall t_i, \forall m, \forall n \ HIST_k(az_m, el_n, t_i) =$$

$$\left\{ l \in O_k(t_i) \ / \ az_{k,l}(t_i) \in \ ]az_m, az_m + \Delta az], el_{k,l}(t_i) \in \ ]el_n, el_n + \Delta el] \right\}$$

Ces histogrammes $HIST_k$ permettent de hiérarchiser spatialement les portions d'espace présentant le maximum d'objets spatiaux 50 potentiellement observables au cours du temps. Cela revient à créer une carte propre à chaque satellite 20 d'indice k reliant, à chaque instant $t_i$ et couple [azimut, élévation] de l'espace discrétisé en [*Δaz, Δel*], un nombre d'objets spatiaux 50 observables. Si la fenêtre temporelle d'observation coïncide avec le début et la fin de la loi de pointage, alors l'histogramme $HIST_k$ peut être directement utilisé pour calculer la loi de pointage, à chaque instant, en fonction de la distribution spatio-temporelle.

Lorsque la fenêtre d'observation, s'étendant par exemple sur plusieurs périodes orbitales, sur laquelle sont déterminés les objets spatiaux 50 observables, est de durée supérieure à celle de la fenêtre temporelle sur laquelle on cherche à déterminer une loi de pointage, par exemple d'une période orbitale, il est par exemple possible de tenir compte de chaque période orbitale de la fenêtre d'observation, pour les combiner et les ramener à une période orbitale pour le calcul de la loi de pointage. Par exemple, la loi de pointage peut être également calculée sur une orbite et répétée sur plusieurs orbites.

Lorsque la fenêtre d'observation, s'étendant par exemple sur une période orbitale, sur laquelle sont déterminés les objets spatiaux 50 observables, est de durée inférieure à celle de la fenêtre temporelle sur laquelle on cherche à déterminer une loi de pointage, par exemple de plusieurs périodes orbitales, il est par exemple possible d'influencer sélectivement la loi de pointage en favorisant les données sur la fenêtre d'observation.

Afin d'exploiter tous les objets spatiaux 50 observables au cours de la fenêtre d'observation, il est par exemple possible de relier pour chaque satellite 20 d'indice k défini par ses positions $(r_k, v_k)$, le temps $t_i$ à la position dudit satellite sur son orbite terrestre $\rho_k(t_i) = f(r_k, v_k, t_i)$ (par exemple l'anomalie vraie du satellite sur son orbite terrestre). En considérant des positions sur orbite discrétisées par $\Delta\rho_k$, nous introduisons également la fonction suivante qui ramène la position $\rho_k(t_i)$ dans l'espace discrétisé :

$$f_k(t_i) = \rho_{k,p} \,/\, \rho_k(t_i) \in \left]\rho_{k,p}, \rho_{k,p} + \Delta\rho_k\right]$$

Il est donc possible de déterminer tous les objets spatiaux 50 différents qui sont observables par le satellite 20 d'indice k depuis une même position $\rho_{k,p}$ de l'orbite terrestre, par exemple selon l'expression suivante :

$$\forall k, \forall m, \forall n, \forall p \; MAP_k(az_m, el_n, \rho_{k,p}) = \cup_{t_i} \{HIST_k(az_m, el_n, t_i) \,/\, f_k(t_i) = \rho_{k,p}\}$$

Dans ce cas, la distribution spatio-temporelle regroupant tous les objets spatiaux 50 observables pour tous les passages, au cours de la fenêtre d'observation, du satellite 20 d'indice k par une même position sur son orbite terrestre correspond par exemple à :

$$HIST'_k(az_m, el_n, t_i) = MAP_k(az_m, el_n, f_k(t_i))$$

Cette distribution spatio-temporelle donne l'ensemble des objets spatiaux 50 potentiellement observables pour chaque position sur orbite discrète selon les directions de pointage discrétisées en [azimut, élévation].

Il est à noter que d'autres formes sont par exemple possibles pour la distribution spatio-temporelle du satellite 20 d'indice k. Par exemple, il est possible de considérer des directions de pointage continues et non discrètes. Dans un tel cas, il est possible de considérer pour chaque direction de pointage de la distribution spatio-temporelle, une grandeur représentative d'une densité d'objets spatiaux 50 potentiellement observables (pour un ou plusieurs passages par chaque position sur orbite terrestre) dans un angle solide autour de chaque direction de pointage, par exemple un angle solide correspondant au champ de vue de l'instrument d'observation 21.

Tel qu'illustré par la figure 2, le procédé 70 de détermination comporte par exemple ensuite une étape 73 de détermination d'une loi de pointage de l'instrument d'observation 21 du satellite 20 d'indice k, sur la fenêtre temporelle et dans le repère d'observation, en fonction de la distribution spatio-temporelle des objets spatiaux 50 observables depuis ledit satellite.

La distribution spatio-temporelle de chaque satellite 20 définit pour ce satellite 20, au cours du temps, les directions de pointage à forte valeur ajoutée. Tel qu'indiqué précédemment, les zones denses de la distribution spatio-temporelle peuvent par exemple être considérées comme des zones dans lesquelles la probabilité de détecter de nouveaux objets spatiaux est plus élevée. Cela découle notamment du fait que de nombreux nouveaux objets spatiaux proviennent de la fragmentation d'objets spatiaux mais sont par exemple trop petits pour être référencés. En outre, si certains objets spatiaux 50 sont des objets spatiaux déduits d'objets spatiaux référencés par simulation de la fragmentation de ceux-ci, alors ces objets spatiaux 50 de la deuxième liste, correspondent à des nouveaux objets spatiaux potentiellement observables, que l'on peut chercher à détecter.

La loi de pointage est par exemple optimisée pour satisfaire un critère de détection de nouveaux objets spatiaux 50 observables. On peut en effet distinguer des objets connus et référencés qui seront par exemple identiques aux objets extraits d'un catalogue de référence, des nouveaux objets spatiaux potentiellement détectés. Les nouveaux objets spatiaux d'une première liste augmentée statistiquement ou physiquement, sont par exemple marqués en mémoire par une étiquette spécifique.

Le calcul de la loi d'observation peut par exemple s'appuyer sur les répartitions d'objets spatiaux connus et sur des objets spatiaux simulés. Ainsi on base avantageusement une partie des calculs sur des données connues, ce qui évite potentiellement une trop grande dérive des calculs.

Différents critères de détection (également désignés par fonctions de coût dans un contexte d'optimisation) peuvent être utilisés. Par exemple, si l'objectif sur la fenêtre temporelle est de surveiller un ou plusieurs nouveaux objets spatiaux 50, la loi de pointage déterminée est la loi de pointage candidate permettant d'observer le plus grand nombre de fois un nombre déterminé de nouveaux objets spatiaux sur la fenêtre temporelle. Si l'objectif sur la fenêtre temporelle est d'augmenter la probabilité de détecter un maximum de nouveaux objets spatiaux, la loi de pointage déterminée est par exemple la loi de pointage candidate permettant d'observer, d'après la distribution spatio-temporelle, le plus grand nombre de nouveaux objets spatiaux différents au moins une fois sur la fenêtre temporelle. Le critère de détection peut également, dans certains cas, inclure une contrainte de revisite, par exemple en maximisant le nombre de nouveaux objets spatiaux différents détectés un nombre déterminé de fois. Des revisites permettront en effet l'obtention d'informations supplémentaires, à partir des photographies réalisées, pour déterminer complètement les paramètres orbitaux du nouvel objet spatial. Toutefois, des informations partielles peuvent aussi être combinées avec d'autres sources d'information comme par exemple d'autres satellites d'observation depuis l'espace.

L'estimation du nombre de nouveaux objets spatiaux 50 pouvant être détectés au moyen d'une loi de pointage s'effectue en appliquant la loi de pointage à la distribution spatio-temporelle associée au satellite 20 considéré. Une telle évaluation prend par exemple en compte le champ de vue de l'instrument d'observation 21 (éventuellement déjà pris en compte dans la distribution spatio-temporelle) pour déterminer le nombre de nouveaux objets spatiaux 50 observables qui se trouvent dans le champ de vue lorsque la ligne de visée est alignée avec une direction de pointage donnée.

La dynamique de la loi de pointage peut par exemple également être prise en compte pour évaluer la vitesse angulaire relative apparente de chaque objet spatial 50 observable par rapport à l'instrument d'observation 21.

Ainsi, un objet spatial 50 est par exemple considéré comme détecté lorsqu'un critère déterminé de détectabilité est vérifié, qui comprend notamment le fait que l'objet spatial 50 se trouve dans le champ de vue de l'instrument d'observation 21, et éventuellement la vitesse angulaire relative apparente (éventuellement conjointement avec la magnitude visuelle apparente).

L'optimisation de la loi de pointage peut par exemple également prendre en compte la faisabilité de chaque loi de pointage considérée. En effet, la loi de pointage doit être viable opérationnellement, notamment en termes de capacité de vitesse de rotation de la ligne de visée de l'instrument d'observation 21 (le temps pour passer d'une direction de pointage à une autre est contraint par l'agilité du satellite 20 et/ou d'un mécanisme de pointage de l'instrument d'observation 21) et d'évitement de corps célestes susceptibles d'éblouir l'instrument d'observation 21 lors du passage d'une direction de pointage à une autre. La prise en compte de contraintes sur la loi de pointage dans le processus d'optimisation assure donc avantageusement sa faisabilité.

Une méthode d'optimisation peut par exemple être mise en œuvre pour déterminer une loi de pointage vérifiant le critère de détection de nouveaux objets spatiaux 50. Le choix d'un type particulier de méthode d'optimisation peut par exemple faire l'objet d'évaluations puis d'une sélection du type d'optimisation. Par exemple, la détermination de la loi de pointage peut mettre en œuvre une méthode d'optimisation automatique continue ou discrète, s'appuyant par exemple sur des algorithmes génétiques, évolutionnaires, de programmation dynamique, etc. La grande dimension de l'espace d'optimisation peut rendre l'utilisation de méthodes exactes complexes à évaluer en un temps raisonnable. Le cas échéant, il peut être avantageux de mettre alors en œuvre des algorithmes exploratoires (par exemple par descente de gradient), qui permettent de converger vers des optima locaux de manière performante.

Indépendamment de la méthode d'optimisation utilisée, la détermination de la loi de pointage peut par exemple considérer une pluralité de lois de pointage candidates. Pour chaque loi de pointage candidate, les objets spatiaux 50 potentiellement observables sont alors estimés au moyen de la distribution spatio-temporelle. La loi de pointage sélectionnée est par exemple l'une des lois de pointage candidates évaluées qui vérifie le critère de détection considéré.

Afin de réduire la complexité de l'optimisation de la loi de pointage de chaque satellite 20, il est par exemple possible de réduire les degrés de liberté lors du paramétrage d'un type de la loi de pointage. Les lois de pointage candidates sont par exemple définies par au moins une loi de pointage paramétrable déterminée, et correspondent à des valeurs candidates respectives différentes de paramètres de l'au moins une loi de pointage paramétrable. Par exemple, l'au moins une loi de pointage paramétrable comporte l'une parmi :

- une loi sinusoïdale, auquel cas les paramètres correspondent par exemple à une amplitude et/ou une phase et/ou une pulsation,
- une loi harmonique, auquel cas les paramètres correspondent par exemple à des amplitudes et/ou des phases et/ou des pulsations,
- une loi polynomiale, par exemple d'ordre prédéterminé ou paramétrable (borné le cas échéant), les paramètres correspondant par exemple aux différents coefficients du polynôme,
- une loi continue et différentiable jusqu'à un certain ordre par morceaux, par exemple une loi basée sur une spline (par exemples des B-splines), auquel cas les paramètres correspondent par exemple à l'ordre de la spline, aux dates consécutives permettant de positionner les nœuds des splines, aux valeurs des coefficients des splines, etc.

La loi de pointage comporte par exemple deux lois de pointage appliquées à des dimensions différentes, par exemple une loi de pointage en azimut et une loi de pointage en élévation. La loi de pointage peut par exemple également comporter un contrôle d'une orientation de l'instrument d'observation 21 en lacet autour de chaque direction de pointage dudit instrument d'observation 21.

Le fait par exemple de borner la loi de pointage en choisissant un type de loi de pointage paramétrable mais bornée, par exemple à 3 harmoniques, permet avantageusement d'effectuer un pointage moins influencé par rapport à la distribution spatio-temporelle. En effet le calcul de la loi de pointage peut par exemple s'appuyer sur des objets spatiaux connus augmentés d'objets spatiaux simulés statistiquement ou physiquement. Ainsi l'utilisation d'une loi de pointage bornée permet avantageusement de réduire l'influence de la distribution spatio-temporelle à la fois du fait qu'on ne cherche pas des objets spatiaux connus et du fait que les objets spatiaux venant augmenter la liste sont des objets spatiaux probables.

Nous décrivons à présent un exemple non limitatif d'optimisation dans le cas où la loi de pointage est constituée d'une loi harmonique en azimut et d'une loi harmonique en élévation. La pulsation pour chaque loi de pointage en azimut et en élévation est considérée comme proportionnelle à la pulsation orbitale $\omega_k = \sqrt{\mu_{earth}/a_k{}^3}$ où $a_k$ est le demi grand axe de l'orbite terrestre du satellite 20 d'indice $k$ et $\mu_{earth}$ est le paramètre gravitationnel standard de la Terre 30. La loi de pointage paramétrable est par exemple définie en azimut et en élévation par:

$$az_k(t) = \sum_{i\in\mathbb{N}} \alpha_i sin(i\omega_k t + \psi_i)$$

$$el_k(t) = \sum_{j\in\mathbb{N}} \delta_j sin(j\omega_k t + \varphi_j)$$

Chaque harmonique d'angle de pointage est caractérisée par un ensemble de trois paramètres définissant son amplitude, sa pulsation et sa phase. Pour un nombre imposé de H harmoniques, la loi de pointage possède donc 6H degrés de liberté définissant le vecteur d'état $\mathbb{X}$ à optimiser. La loi de pointage résultante permet de proposer une stratégie de balayage de l'espace périodique et générique. L'agilité du satellite 20 déterminera les couples amplitudes / fréquences maximum admissibles.

Pour chaque satellite 20 d'indice k, la fonction de coût (critère de détection) vise par exemple à maximiser le nombre de nouveaux objets spatiaux 50 différents détectés au moins une fois :

$$KPI_k(\mathbb{X}) = max_{\mathbb{X}} \left( Card \left( \cup_{az_k,el_k,t} \left( HIST'_k(az_k,el_k,t) \right) \right) \right)$$

Il est à noter que la fonction de coût ci-dessus correspond à un critère de détection local à chaque satellite 20 d'indice k. Dans le cas où le système de surveillance comporte plusieurs satellites 20, il est possible d'optimiser séparément la loi de pointage de chaque satellite 20 selon un critère de détection local. Les lois de pointage de tous les satellites 20 sont par exemple optimisées conjointement, selon un critère de détection global. Par exemple, en considérant $N_{sat}$ satellites, le critère de détection global visant à maximiser le nombre de nouveaux objets spatiaux 50 différents détectés au moins une fois peut être exprimé comme suit :

$$KPI(\mathbb{X}^{N_{sat}}) = max_{\mathbb{X}^{N_{sat}}} \left( Card \left( \cup_k \left( \cup_{az_k,el_k,t} \left( HIST'_k(az_k,el_k,t) \right) \right) \right) \right)$$

Afin d'explorer un large panel de lois de pointage candidates, il est possible d'utiliser un algorithme d'optimisation évolutionnaire dont les principaux hyper paramètres spécifiques peuvent être par exemple :

- une contrainte de vitesse de rotation maximale des satellites 20 et/ou de mécanismes de pointage des instruments d'observation 21,
- un nombre d'harmoniques maximum par angle de pointage (azimut, élévation).

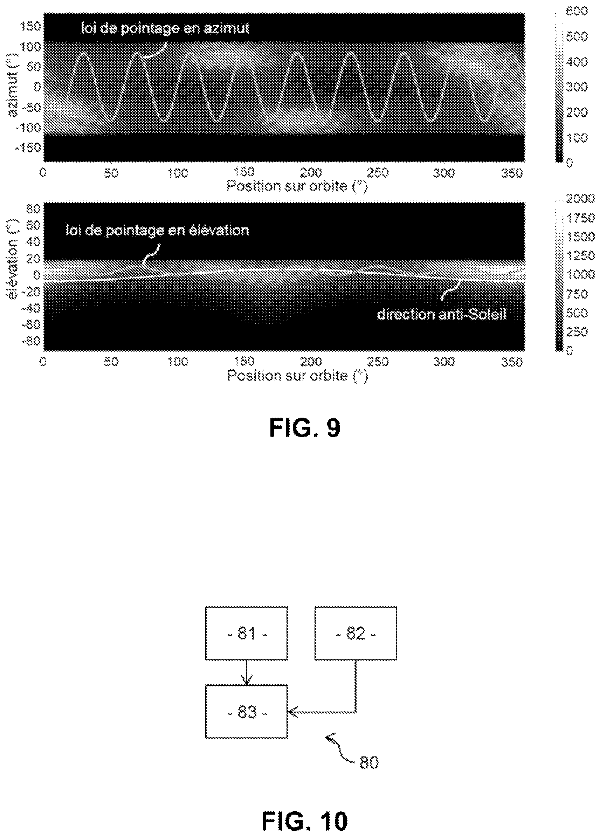

La figure 9 représente schématiquement un exemple de distribution spatio-temporelle en azimut et en élévation obtenue pour un satellite 20 en orbite terrestre héliosynchrone (« sun-synchronous orbit » ou SSO), 6h-18h à 500 kilomètres d'altitude. La figure 9 montre également les lois de pointage en azimut et en élévation obtenues dans le repère d'observation en appliquant un algorithme évolutionnaire, avec par exemple deux harmoniques par angle azimut et élévation admises (c'est-à-dire $H = 2$) et une vitesse de rotation maximale de 1°/s. La distribution spatio-temporelle et la loi de pointage sont déterminées sur une fenêtre temporelle correspondant à une période orbitale, et sont données sur la figure 9 en fonction des positions successives du satellite 20 sur son orbite terrestre au cours de la période orbitale (de 0° à 360°). Sur la figure 9, un gris foncé représente une faible densité d'objets spatiaux 50 observables, tandis qu'un gris clair représente une forte densité d'objets spatiaux 50 observables. La figure 9 représente également la direction anti-Soleil, c'est à dire la direction à l'opposé du Soleil.

Comme on le constate sur la figure 9, par construction du repère d'observation, les objets spatiaux 50 observables sont dans cet exemple concentrés en azimut entre environ -100° et environ 100° et concentrés autour d'une élévation proche de 0°. L'algorithme évolutionnaire propose ici une loi de pointage offrant un maximum de balayage en azimut avec une amplitude proche de 90° et une harmonique de rang 9 couplé à un balayage en élévation plus basse fréquence (rang 6) et de faible amplitude afin de rester concentré dans les zones à fortes densités.

La figure 10 représente schématiquement les principales étapes d'un autre exemple de réalisation d'un procédé 80 de détermination de loi de pointage de l'instrument d'observation 21 d'un satellite 20, cet exemple n'étant pas couvert par l'étendue des revendications.

Le procédé 80 de détermination de la loi de pointage de la figure 10 s'appuie par exemple sur un repère d'observation tel que décrit précédemment, et tout ce qui a été décrit précédemment au sujet du repère d'observation est par exemple applicable pour ce procédé 80 de détermination d'une loi de pointage. Le procédé 80 de détermination de la loi de pointage de la figure 10 est par exemple mis en œuvre par un dispositif de calcul tel que décrit ci-avant.

Tel qu'illustré par la figure 10, le procédé 80 de détermination de loi de pointage comporte :

- une étape 81 de détermination d'une première bande exclue en azimut et d'une seconde bande exclue en azimut déterminant entre elles une bande autorisée en azimut qui correspond à une plage angulaire fonction du temps comportant uniquement des directions de pointage en azimut qui, au cours de la fenêtre temporelle, sont observables vis-à-vis de la Terre 30 et du Soleil 40,
- une étape 82 de détermination d'une première bande exclue en élévation et d'une seconde bande exclue en élévation déterminant entre elles une bande autorisée en élévation qui correspond à une plage angulaire fonction du temps comportant uniquement des directions de pointage en élévation qui, au cours de la fenêtre temporelle, sont observables vis-à-vis de la Terre 30 et du Soleil 40.

En effet, du fait des contraintes d'observabilité géométriques vis-à-vis de la Terre 30 et du Soleil 40 et du repère d'observation considéré, les zones non observables de l'espace vont se retrouver concentrées, de même que les zones observables de l'espace. Cela est visible par exemple sur la figure 9. En effet, la distribution spatio-temporelle montre clairement, en azimut comme en élévation, une bande supérieure et une bande inférieure de couleur noire qui correspondent à des zones dans lesquelles il n'y a pas d'objets spatiaux 50 observables. En pratique, ces bandes supérieures et inférieures de couleur noire correspondent à des zones dans lesquelles il n'est pas possible d'observer des objets spatiaux 50 du fait des contraintes d'observabilité géométriques. Par conséquent, ces bandes supérieures et inférieures peuvent être déterminées sans avoir à déterminer préalablement des objets spatiaux 50 observables et des distributions spatio-temporelles d'objets spatiaux 50 observables (c'est-à-dire sans exécuter les étapes 71 et 72 du procédé 70 de détermination de la figure 2). Ces bandes supérieures et inférieures correspondent aux premières et secondes bandes exclues en azimut et en élévation. Les zones se trouvant entre ces premières et secondes bandes exclues correspondent par exemple aux bandes autorisées en azimut et en élévation, qui correspondent aux zones observables de l'espace au cours du temps, qui sont ici continues dans l'espace et dans le temps grâce à l'utilisation d'un repère d'observation centré sur le satellite dont les axes sont positionnés en fonction des positions du Soleil et de la Terre.

Il est à noter qu'il est par exemple possible de déterminer des bandes autorisées de largeur angulaire variable au cours du temps, par exemple en excluant pour les premières et secondes bandes exclues uniquement les directions de pointage qui ne vérifient pas les contraintes d'observabilité géométriques. Il est également possible, suivant d'autres exemples, de déterminer des bandes autorisées de largeur angulaire constante au cours du temps, par exemple en déterminant une bande de largeur constante maximale entre les première et seconde bandes exclues, en azimut et en élévation.

Tel qu'illustré par la figure 10, le procédé 80 de détermination comporte alors une étape 83 de détermination d'une loi de pointage en azimut comportant uniquement des directions de pointage en azimut à l'intérieur de la bande autorisée en azimut et d'une loi de pointage en élévation comportant uniquement des directions de pointage en élévation à l'intérieur de la bande autorisée en élévation.

Du fait que les zones observables se présentent sous la forme de bandes autorisées (plages angulaires au cours du temps), il devient aisé de déterminer une loi de pointage permettant de balayer chaque bande autorisée, par exemple, sans avoir à effectuer d'optimisation comme précédemment. On peut par exemple également limiter la première liste d'objets spatiaux à l'aide de ces bandes d'exclusion pour arriver à la deuxième liste d'objets spatiaux. La deuxième liste d'objets spatiaux servira par exemple ensuite à calculer une distribution spatio-temporelle puis la loi de pointage.

Tel qu'indiqué ci-dessus, les bandes autorisées en azimut et en élévation peuvent être déterminées sans avoir à déterminer préalablement des objets spatiaux 50 observables et des distributions spatio-temporelles d'objets spatiaux 50 observables en fonction de leurs paramètres orbitaux. Toutefois, rien n'exclut, suivant d'autres exemples, de déterminer comme précédemment une distribution spatio-temporelle, et de déterminer les bandes autorisées en azimut et en élévation en fonction de cette distribution spatio-temporelle. Dans un tel cas, il est par exemple possible d'exclure des bandes autorisées les directions de pointage qui, bien qu'elles vérifient les contraintes d'observabilité géométriques, correspondent à des zones peu denses d'après la distribution spatio-temporelle. Ainsi, la largeur angulaire de chaque bande autorisée peut varier au cours du temps en fonction des positions des zones denses de la distribution spatio-temporelle.

Une fois qu'une loi de pointage a été déterminée pour un satellite 20, ladite loi de pointage peut être appliquée par le satellite 20 au cours d'une fenêtre temporelle (et éventuellement répétée périodiquement) pour rechercher de nouveaux objets spatiaux 50. Le pointage de l'instrument d'observation 21 du satellite 20 est alors contrôlé en fonction de la loi de pointage, en alignant la ligne de visée dudit instrument d'observation 21 avec les directions de pointage de la loi de pointage. Par exemple, la loi de pointage, déterminée dans le repère d'observation, est convertie dans un autre repère satellite plus propice au contrôle de la ligne de visée de l'instrument d'observation 21, par exemple un repère satellite lié à la structure du satellite 20. Cette conversion est par exemple réalisée au sol, et la loi de pointage convertie est transmise au satellite 20 par une station sol (non représentée sur les figures). Plusieurs images sont ainsi acquises successivement par l'instrument d'observation 21 simultanément au contrôle de son pointage en fonction de la loi de pointage. Tout ou partie de la pluralité d'images peut correspondre à une vidéo. La pluralité d'images ainsi acquises est ensuite traitée pour rechercher de nouveaux objets spatiaux 50. Ce traitement de la pluralité d'images s'effectue par exemple au sol, après que ladite pluralité d'images a été transmise par le satellite 20 à une station sol.

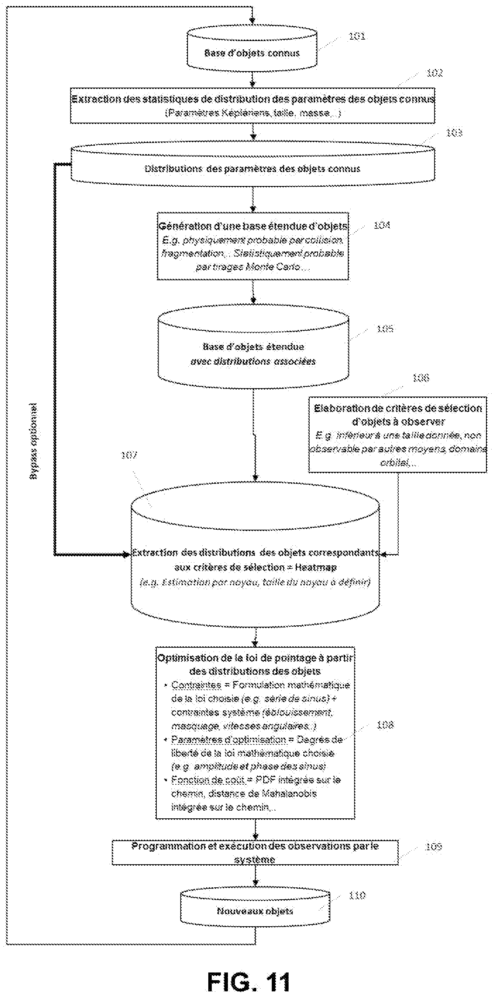

La figure 11 représente un exemple de procédé basé sur une loi de pointage selon l'invention. Des données sont par exemple fournies en entrée 101 sous la forme d'objets spatiaux connus associés à leurs paramètres orbitaux.

Les listes d'objets spatiaux se présentent par exemple sous la forme de bases de données.

Une étape suivante 102 consiste par exemple en une extraction partielle à partir de ces données d'entrée. L'extraction peut par exemple être basée sur les paramètres képlériens d'intérêt ou d'autres paramètres comme la masse ou la taille, servant de filtres lors d'une sélection. L'extraction peut aussi comprendre l'utilisation d'une variable aléatoire pour réduire de façon aléatoire une base de données d'objets spatiaux référencés.

Un calcul de distribution 103 est par exemple réalisé sur la base de données filtrée. Cette base de données sert par exemple de base de données opérationnelle.

Alternativement, on réalise également une augmentation 104 de la base de données. Cette augmentation est par exemple le résultat d'une simulation de collision physique entre deux objets spatiaux connus qui génère alors de données représentatives des débris spatiaux issus de cette collision. Cette augmentation peut aussi de façon alternative ou de façon complémentaire, être le résultat de statistiques à partir des objets spatiaux connus, utilisant par exemple un tirage dit « Monte Carlo ».

On mémorise ensuite la base de donnée augmentée 105 qui servira comme base de données opérationnelle pour le calcul de la loi de pointage.

A partir de la base de données opérationnelle, on réalise ensuite une extraction d'une distribution d'objets 107 en utilisant des critères de sélection. La distribution se présente par exemple sous la forme d'une carte des densités. On peut par exemple également obtenir une fonction de distribution en exploitant une estimation par noyau également désignée en anglais par « kernel density estimation » ou KDE.

Cette distribution permet ensuite de calculer la loi de pointage 108. La loi de pointage est par exemple issue d'une fonction déterminée respectant des contraintes telles que l'éblouissement, le masquage ou les vitesses angulaires. L'éclairement combiné à la taille des objets spatiaux, voire combiné à leur vitesse, est aussi un critère pouvant rentrer en compte. Le choix de la fonction et de ses degrés de paramétrage sont par exemple pris en compte pour l'élaboration de la loi de pointage. On utilise par exemple également une fonction de coût pour paramétrer la loi de pointage. La fonction de coût permet par exemple d'évaluer la performance d'un paramétrage candidat ou d'une loi candidate, le long du chemin correspondant à la direction de pointage, par exemple en utilisant la distance de Mahalanobis intégrée sur le chemin pour optimiser un pointage vers des zones potentiellement à forte densité ou voisines.

La loi de pointage peut alors être programmée au sol et transmise à bord de l'engin spatial d'observation 109 pour y être exécutée.

La loi est basée sur des objets spatiaux connus et il est aisé de les écarter lors de la recherche de nouveaux objets spatiaux. De plus un télescope réalise par exemple une capture d'image qui inclut un fond étoilé, ce fond étoilé permettant une exploitation et un repositionnement particulièrement précis des traces de nouveaux objets potentiellement capturées. L'obtention de plusieurs paramètres orbitaux 110 issus de l'observation sur ces nouveaux objets, par exemple revisités, permettra de cataloguer ces nouveaux objets spatiaux.

La loi est par exemple remise à jour régulièrement en fonction des catalogues d'objets mis à jour et pour prendre en compte la trajectoire mise à jour du satellite d'observation.

**Revendications**

1. Procédé (70) de détermination d'au moins une loi de pointage d'un instrument d'observation (21) d'au moins un satellite (20) en orbite terrestre pour une détection de nouveaux objets spatiaux en orbite terrestre, ladite loi de pointage comportant des directions de pointage successives dudit instrument d'observation pour l'acquisition d'une pluralité d'images, sur une fenêtre temporelle limitée, égale ou étendue par rapport à une fenêtre temporelle d'observation, ledit procédé de détermination comportant :

   - une (71) détermination, à partir d'une première liste d'objets spatiaux associés à leurs paramètres orbitaux, d'une deuxième liste d'objets spatiaux qui sont observables depuis ledit au moins un satellite sur ladite fenêtre temporelle d'observation, un critère d'observabilité étant vérifié en fonction au moins des paramètres orbitaux des objets spatiaux de la première liste et de paramètres orbitaux de l'au moins un satellite,
   - une (72) détermination d'une distribution spatio-temporelle desdits objets spatiaux observables sur la fenêtre temporelle d'observation, la distribution spatio-temporelle se présentant sous la forme d'une cartographie de densités spatio-temporelles et décrivant, pour chaque direction de pointage par rapport au satellite et à chaque instant de la fenêtre temporelle d'observation, une grandeur représentative d'une densité de probabilité des objets spatiaux potentiellement observables dans ladite direction de pointage depuis ledit satellite audit instant de la fenêtre temporelle d'observation,
   - une (73) détermination de la loi de pointage de l'instrument d'observation, comportant des directions de pointage successives dudit instrument d'observation pour l'acquisition de ladite pluralité d'images, sur ladite fenêtre temporelle limitée, égale, ou étendue par rapport à ladite fenêtre temporelle d'observation, en fonction de ladite distribution spatio-temporelle.

2. Procédé selon la revendication 1, dans lequel ladite loi de pointage comporte des directions de pointage successives dudit instrument d'observation s'étendant sur au moins une période orbitale dudit satellite et dans lequel ladite fenêtre temporelle d'observation s'étend sur une durée égale ou supérieure à une période orbitale.

3. Procédé selon l'une des revendications précédentes, dans lequel la première liste d'objets spatiaux associés à leurs paramètres orbitaux est obtenue à partir d'une extraction dans un catalogue d'objets spatiaux connus, cette extraction étant ensuite augmentée par au moins une prédiction statistique de nouveaux objets spatiaux à partir d'objets spatiaux connus ou par au moins une simulation de collision physique entre de deux objets spatiaux connus.

4. Procédé selon la revendication 3, dans lequel la détermination de ladite loi de pointage est réalisée en utilisant une fonction de coût se rapportant aux objets spatiaux potentiellement observés en excluant les objets spatiaux connus revisités et sous contrainte d'une loi mathématique de balayage bornée et paramétrable.

5. Procédé selon l'une des revendications 3 et 4, dans lequel la loi de pointage est sélectionnée parmi une pluralité de lois de pointage candidates, par une évaluation de chaque loi de pointage candidate comportant une estimation, en fonction de la distribution spatio-temporelle, des objets spatiaux non connus potentiellement détectés sur ladite fenêtre temporelle d'observation en appliquant ladite loi de pointage candidate, la loi de pointage candidate sélectionnée étant celle pour laquelle un critère de détection de nouveaux objets spatiaux est vérifié.

6. Procédé (70) de détermination selon la revendication 5, dans lequel le critère est vérifié lorsque le nombre de nouveaux objets spatiaux différents détectés au moins une fois est maximisé.

7. Procédé (70) de détermination selon la revendication 5, dans lequel le critère est vérifié lorsque le nombre de nouveaux objets spatiaux différents revisités un nombre déterminé de fois est maximisé.

8. Procédé (70) selon l'une quelconque des revendications précédentes, dans lequel la distribution spatio-temporelle est réalisée dans un repère satellite déterminé, dit repère d'observation, le repère d'observation variant au cours du temps en fonction d'une direction du Soleil et d'une direction de la Terre par rapport audit satellite, ladite loi de pointage étant également déterminée dans le repère d'observation.

9. Procédé de recherche de nouveaux objets spatiaux par au moins un satellite en orbite terrestre, ledit au moins un satellite comportant un instrument d'observation, comportant :

   - une détermination d'une loi de pointage de l'instrument d'observation dudit au moins un satellite, selon un procédé selon l'une quelconque des revendications précédentes,

- un contrôle, en fonction de la loi de pointage, du pointage de l'instrument d'observation, et acquisition d'images par ledit instrument d'observation sur au moins une période orbitale,
- une recherche de nouveaux objets spatiaux dans les images acquises par l'instrument d'observation.

10. Procédé de recherche selon la revendication 9, dans lequel la loi de pointage est mise à jour à la fin de la première fenêtre temporelle d'observation, pour une nouvelle première fenêtre temporelle d'observation.

11. Procédé de recherche d'objets spatiaux selon la revendication 9 ou 10, dans lequel la première liste d'objets spatiaux est complétée par des objets correspondant à des nouveaux objets spatiaux détectés (110).

12. Produit programme d'ordinateur comportant des instructions qui, lorsqu'elles sont exécutées par au moins un processeur, configurent ledit au moins un processeur pour mettre en œuvre un procédé (70) de détermination de loi de pointage selon l'une quelconque des revendications 1 à 8.

13. Dispositif de calcul comportant au moins un processeur et au moins une mémoire, ledit au moins processeur étant configuré pour mettre en œuvre un procédé (70) de détermination de loi de pointage selon l'une quelconque des revendications 1 à 8.

14. Système de surveillance de l'espace depuis l'espace, comportant :

- au moins un satellite (20) en orbite terrestre, ledit au moins un satellite comportant un instrument d'observation (21),
- un dispositif de calcul selon la revendication 13.

**Patentansprüche**

1. Verfahren (70) zur Bestimmung mindestens einer Richtregel für ein Beobachtungsinstrument (21) mindestens eines Satelliten (20) in der Erdumlaufbahn, um neue Raumobjekte in der Erdumlaufbahn zu detektieren, wobei die Richtregel aufeinanderfolgende Ausrichtungen des Beobachtungsinstruments für das Erfassen mehrerer Bilder während eines begrenzten Zeitfensters, das mit einem Beobachtungszeitfenster identisch oder im Vergleich dazu erweitert ist, aufweist, wobei das Bestimmungsverfahren aufweist:

- ausgehend von einer ersten Liste von Raumobjekten mit ihren dazugehörigen Bahnparametern, eine Bestimmung (71) einer zweiten Liste von Raumobjekten, die von dem mindestens einen Satelliten aus während des Beobachtungszeitfensters beobachtbar sind, wobei ein Beobachtbarkeitskriterium als Funktion zumindest von Bahnparametern der Raumobjekte der ersten Liste und von Bahnparametern des mindestens einen Satelliten verifiziert wird,
- eine Bestimmung (72) einer Raum-Zeit-Verteilung der während des Beobachtungszeitfensters beobachtbaren Raumobjekte, wobei die Raum-Zeit-Verteilung sich in Form einer Kartographie von Raum-Zeit-Dichten darstellt und für jede Ausrichtung bezüglich des Satelliten und zu jedem Zeitpunkt des Beobachtungszeitfensters eine Größe beschreibt, die eine Wahrscheinlichkeitsdichte der Raumobjekte repräsentiert, die in dieser Ausrichtung von dem Satelliten aus zu diesem Zeitpunkt des Beobachtungszeitfensters potentiell beobachtbar sind,
- eine Bestimmung (73) der Richtregel für das Beobachtungsinstrument, aufweisend aufeinanderfolgende Ausrichtungen des Beobachtungsinstruments für das Erfassen der mehreren Bilder während des begrenzten Zeitfensters, das mit einem Beobachtungszeitfenster identisch oder im Vergleich dazu erweitert ist, als Funktion der Raum-Zeit-Verteilung.

2. Verfahren nach Anspruch 1, in welchem die Richtregel aufeinanderfolgende Ausrichtungen des Beobachtungsinstruments über mindestens eine Umlaufperiode des Satelliten aufweist, und in welchem das Beobachtungszeitfenster sich über eine Dauer erstreckt, die gleich oder länger als eine Umlaufperiode ist.

3. Verfahren nach einem der vorstehenden Ansprüche, in welchem die erste Liste von Raumobjekten mit ihren dazugehörigen Bahnparametern ausgehend von einer Auslesung von Daten aus einem Katalog bekannter Raumobjekte gewonnen wird, wobei diese Auslesung von Daten dann durch mindestens eine statistische Vorhersage von neuen Raumobjekten ausgehend von bekannten Raumobjekten oder durch mindestens eine Simulation einer physischen Kollision zwischen zwei bekannten Raumobjekten erweitert wird.

**4.** Verfahren nach Anspruch 3, in welchem die Bestimmung der Richtregel durch Verwenden einer Kostenfunktion durchgeführt wird, die sich auf potentiell beobachtete Raumobjekte bezieht, unter Ausschluss der wiedergesichteten bekannten Raumobjekte und unter Bedingung eines mathematischen Gesetzes beschränkter und parametrierbarer Abtastung.

**5.** Verfahren nach einem der Ansprüche 3 und 4, in welchem die Richtregel aus mehreren Kandidatenrichtregeln durch eine Evaluation jeder Kandidatenrichtregel ausgewählt wird, die eine von der Raum-Zeit-Verteilung abhängige Schätzung von nichtbekannten Raumobjekten, die während des Beobachtungszeitfensters durch Anwenden der Kandidatenrichtregel potentiell detektiert werden, aufweist, wobei die ausgewählte Kandidatenrichtregel diejenige ist, für die ein Detektionskriterium, das Detektion neuer Raumobjekte betrifft, verifiziert ist.

**6.** Bestimmungsverfahren (70) nach Anspruch 5, in welchem das Kriterium verifiziert ist, wenn die Anzahl verschiedener neuer Raumobjekte, die mindestens ein Mal detektiert wurden, maximiert ist.

**7.** Bestimmungsverfahren (70) nach Anspruch 5, in welchem das Kriterium verifiziert ist, wenn die Anzahl verschiedener neuer Raumobjekte, die eine bestimmte Anzahl von Malen wiedergesichtet wurden, maximiert ist.

**8.** Verfahren (70) nach einem der vorstehenden Ansprüche, in welchem die Raum-Zeit-Verteilung in einem bestimmten Satellitenreferenzsystem, Beobachtungsreferenzsystem genannt, erstellt wird, wobei das Beobachtungsreferenzsystem im Verlauf der Zeit als Funktion einer Richtung der Sonne und einer Richtung der Erde bezüglich des Satelliten variiert, wobei die Richtregel ebenfalls in dem Beobachtungsreferenzsystem bestimmt wird.

**9.** Verfahren zum Suchen neuer Raumobjekte mithilfe mindestens eines Satelliten in der Erdumlaufbahn, wobei der mindestens eine Satellit ein Beobachtungsinstrument aufweist, aufweisend:

- eine Bestimmung einer Richtregel für das Beobachtungsinstrument des mindestens einen Satelliten nach einem der vorstehenden Ansprüche,
- eine Steuerung der Ausrichtung des Beobachtungsinstruments als Funktion der Richtregel und Erfassung von Bildern mithilfe des Beobachtungsinstruments während mindestens einer Umlaufperiode,
- eine Suche nach neuen Raumobjekten in den von dem Beobachtungsinstrument erfassten Bildern.

**10.** Verfahren zum Suchen nach Anspruch 9, in welchem am Ende des ersten Beobachtungszeitfensters die Richtregel für ein neues erstes Beobachtungszeitfenster aktualisiert wird.

**11.** Verfahren zum Suchen von Raumobjekten nach Anspruch 9 oder 10, in welchem die erste Liste von Raumobjekten durch Objekte, die neuen detektierten Raumobjekten (110) entsprechen, ergänzt wird.

**12.** Computerprogrammprodukt aufweisend Befehle, die, wenn sie von mindestens einem Prozessor ausgeführt werden, den mindestens einen Prozessor konfigurieren, ein Verfahren (70) zur Bestimmung der Richtregel nach einem der Ansprüche 1 bis 8 durchzuführen.

**13.** Berechnungsvorrichtung aufweisend mindestens einen Prozessor und mindestens einen Speicher, wobei der mindestens eine Prozessor konfiguriert ist, ein Verfahren (70) zur Bestimmung der Richtregel nach einem der Ansprüche 1 bis 8 durchzuführen.

**14.** System zum Überwachen des Weltraums von dem Weltraum aus, aufweisend:

- mindestens einen Satelliten (20) in der Erdumlaufbahn, wobei der mindestens eine Satellit ein Beobachtungsinstrument (21) aufweist,
- eine Berechnungsvorrichtung nach Anspruch 13.

**Claims**

**1.** Method (70) for determining at least one pointing law of an observation instrument (21) of at least one satellite (20) in terrestrial orbit for detecting new space objects in terrestrial orbit, said pointing law comprising successive pointing directions of said observation instrument for acquiring a plurality of images, over a limited time window, equal to or extended with respect to an observation time window, said determination method comprising:

- determining (71), from a first list of space objects associated with their orbital parameters, a second list of space objects that are observable from said at least one satellite on said observation time window, an observability criterion being verified based on at least the orbital parameters of the space objects of the first list and orbital parameters of the at least one satellite,

- determining (72) a spatial-temporal distribution of said observable space objects over the observation time window, the spatial-temporal distribution being in the form of a mapping of spatial-temporal densities and describing, for each pointing direction with respect to the satellite and at each instant of the observation time window, a quantity representative of a probability density of the space objects potentially observable in said pointing direction from said satellite at said instant of the observation time window,

- determining (73) the pointing law of the observation instrument, comprising successive pointing directions of said observation instrument for acquiring said plurality of images, over said limited time window, equal, or extended with respect to said observation time window, based on said spatial-temporal distribution.

2. Method according to claim 1, wherein said pointing law includes successive pointing directions of said observation instrument extending over at least one orbital period of said satellite and wherein said observation time window extends over a duration equal to or greater than one orbital period.

3. Method according to one of the preceding claims, wherein the first list of space objects associated with their orbital parameters is obtained from an extraction in a catalogue of known space objects, this extraction being then increased by at least one statistical prediction of new space objects from known space objects or by at least one simulation of physical collision between two known space objects.

4. Method according to claim 3, wherein the determination of said pointing law is performed using a cost function relating to the space objects potentially observed by excluding the revisited known space objects and under the constraint of a bounded and configurable mathematical scanning law.

5. Method according to one of claims 3 and 4, wherein the pointing law is selected from a plurality of candidate pointing laws, by an evaluation of each candidate pointing law including an estimation, based on the spatial-temporal distribution, of unknown space objects potentially detected on said observation time window by applying said candidate pointing law, the selected candidate pointing law being that for which a criterion for the detection of new spatial objects is satisfied.

6. Determination method (70) according to claim 5, wherein the criterion is satisfied when the number of different new space objects detected at least once is maximised.

7. Determination method (70) according to claim 5, wherein the criterion is satisfied when the number of different new space objects revisited a given number of times is maximised.

8. Method (70) according to any one of the preceding claims, wherein the spatial-temporal distribution is carried out in a given satellite reference frame, referred to as the observation reference frame, the observation reference frame varying over time according to a direction of the Sun and a direction of the Earth with respect to said satellite, said pointing law also being determined in the observation reference frame.

9. Method for searching for new space objects by at least one satellite in terrestrial orbit, said at least one satellite including an observation instrument, including:

- determining a pointing law of the observation instrument of said at least one satellite, according to a method according to any one of the preceding claims,
- checking, according to the pointing law, the pointing of the observation instrument, and acquiring images by said observation instrument over at least one orbital period,
- a search for new space objects in the images acquired by the observation instrument.

10. Search method according to claim 9, wherein the pointing law is updated at the end of the first observation time window, for a new first observation time window.

11. Space-object search method according to claim 9 or 10, wherein the first list of space objects is supplemented with objects corresponding to new space objects detected (110).

12. Computer program product including instructions that, when executed by at least one processor, configure said at least one processor to implement a method (70) for determining a pointing law according to any one of claims 1 to 8.

13. Computing device including at least one processor and at least one memory, said at least one processor being configured to implement a method (70) for determining a pointing law according to any one of claims 1 to 8.

14. System for monitoring space from space, including:

   - at least one satellite (20) in terrestrial orbit, said at least one satellite including an observation instrument (21),
   - a computing device according to claim 13.

FIG. 1

FIG. 2

**FIG. 3**

**FIG. 4**

**FIG. 5**

**FIG. 6**

**FIG. 7**

**FIG. 8**

**FIG. 9**

**FIG. 10**

Base d'objets connus    101

Extraction des statistiques de distribution des paramètres des objets connus    102
(Paramètres Képlériens, taille, masse...)

Distributions des paramètres des objets connus    103

Génération d'une base étendue d'objets    104
*E.g. physiquement probable par collision,
fragmentation... Statistiquement probable
par tirages Monte Carlo...*

Base d'objets étendue    105
*avec distributions associées*

Elaboration de critères de sélection    106
d'objets à observer
*E.g. inférieur à une taille donnée, non
observable par autres moyens, domaine
orbital,...*

107    Extraction des distributions des objets correspondants
aux critères de sélection = Heatmap
*(e.g. Estimation par noyau, taille du noyau à définir)*

Optimisation de la loi de pointage à partir
des distributions des objets
- Contraintes = Formulation mathématique
  de la loi choisie *(e.g. série de sinus)* +
  contraintes système *(éblouissement,
  masquage, vitesses angulaires...)*
- Paramètres d'optimisation = Degrés de    108
  liberté de la loi mathématique choisie
  *(e.g. amplitude et phase des sinus)*
- Fonction de coût = PDF intégrée sur le
  chemin, distance de Mahalanobis
  intégrée sur le chemin,...

Programmation et exécution des observations par le    109
système

Nouveaux objets    110

Bypass optionnel

## FIG. 11

**RÉFÉRENCES CITÉES DANS LA DESCRIPTION**

**Documents brevets cités dans la description**

- US 9916507 B1

- US 2015088475 A1